# EUROPÄISCHE PATENTSCHRIFT

(11) **EP 0 373 718 B1**
(45) Veröffentlichungstag und Bekanntmachung des Hinweises auf die Patenterteilung: **30.11.1994**
(21) Anmeldenummer: 89203146.9
(22) Anmeldetag: 11.12.1989
(51) Int. Cl.: G11B 15/17, G11B 27/36, G11B 27/34, G11B 23/04, G11B 15/07

(54) **Aufzeichnungs- und/oder Wiedergabesystem und Kassette für ein solches System**
Recording and/or reproducing system and cassette for such a system
Système d'enregistrement et/ou de reproduction et cassette pour un tel système

(30) Priorität: 14.12.1988 AT 3053/88
(43) Veröffentlichungstag der Anmeldung: 20.06.1990
(73) Patentinhaber: Philips Electronics N.V., 5621 BA Eindhoven (NL)
(72) Erfinder: Schranz, Hans, NL-5656 AA Eindhoven (NL)
(74) Vertreter: van der Kruk, Willem Leonardus

(56) Entgegenhaltungen:
- WO-A-84/03791
- BE-A- 871 596
- BE-A- 879 620
- FR-A- 1 281 335
- FR-A- 2 461 299
- GB-A- 2 191 588
- US-A- 4 743 984
- PATENT ABSTRACTS OF JAPAN vol. 11, no. 391 (P-649) 22 Dezember 1987,& JP-A-62 157391 (SONY) 13 Juli 1987,
- PATENT ABSTRACTS OF JAPAN vol. 9, no. 157 (P-369)(1880) 02 Juli 1985,& JP-A-60 32177 (MATSUSHITA) 19 Februar 1985,
- PATENT ABSTRACTS OF JAPAN vol. 6, no. 173 (E-129)(1051) 07 September 1982,& JP-A-57 91550 (FUJITSU) 07 Juni 1982,

## Beschreibung

Die Erfindung bezieht sich auf ein Aufzeichnungs- und/oder Wiedergabesystem, das aus mindestens einem Aufzeichnungs- und/oder Wiedergabegerät und mindestens einer wahlweise in zwei um eine Wendeachse gewendeten Lagen in ein Gerät einsetzbaren Kassette besteht, in der ein Aufzeichnungsträger untergebracht ist und die zum Speichern von der Kassette zugeordneten Daten eine elektrisch ansprechbare Festkörperspeichereinrichtung enthält, die mindestens je einer der beiden Lagen der Kassette zuordenbare Speicherbereiche aufweist und die für einen Datentransfer zu und von der Festkörperspeichereinrichtung vorgesehene, eine vorgegebene Zuordnung von Signalen aufweisende Signalanschlüsse und für die Spannungsversorgung der Festkörperspeichereinrichtung vorgesehene, eine vorgegebene Zuordnung von Potentialen aufweisende Versorgungsanschlüsse aufweist, von denen die Signalanschlüsse der Festkörperspeichereinrichtung mit an der Kassette angebrachten, von außerhalb der Kassette zugänglichen, für einen Datentransfer vorgesehenen Kontakten verbunden sind, die beim Einsetzen einer Kassette in das Gerät mit in dem Gerät untergebrachten, für einen Datentransfer vorgesehenen Gegenkontakten in Kontaktverbindung treten, die mit für einen Datentransfer vorgesehenen, die gleiche Zuordnung von Signalen wie die für einen Datentransfer vorgesehenen Signalanschlüsse der Festkörperspeichereinrichtung aufweisenden Signalanschlüssen einer im Gerät vorgesehenen Schreib- und Leseeinrichtung verbunden sind, die zum Einschreiben und Auslesen von Daten in und aus den den beiden Lagen der Kassette zuordenbaren Speicherbereichen der Festkörperspeichereinrichtung vorgesehen ist, und von denen die Versorgungsanschlüsse der Festkörperspeichereinrichtung mit an der Kassette angebrachten, von außerhalb der Kassette zugänglichen, für die Spannungsversorgung vorgesehenen Kontakten verbunden sind, die beim Einsetzen einer Kassette in das Gerät mit in dem Gerät untergebrachten, für die Spannungsversorgung vorgesehenen Gegenkontakten in Kontaktverbindung treten, die mit für die Spannungsversorgung vorgesehenen, die gleiche Zuordnung von Potentialen wie die Versorgungsanschlüsse der Festkörperspeichereinrichtung aufweisenden geräteseitigen Spannungsversorgungsanschlüssen verbunden sind, und im Gerät eine Detektoreinrichtung zum Ermitteln der jeweiligen Lage der in das Gerät eingesetzten Kassette vorgesehen ist.

Ein solches System ist aus der DE-PS 29 43 409 bekannt. Bei diesem bekannten System enthält jede systemgemäße Kassette als Festkörperspeichereinrichtung einen Halbleiterspeicher, dessen Anschlüsse mit insgesamt sieben an der Kassette angebrachten, von außerhalb der Kassette zugänglichen Kontakten eines Kontaktsatzes verbunden sind. Diese sieben Kontakte des kassettenseitigen Kontaktsatzes stehen je nach der Lage der Kassette in einem systemgemäßen Gerät mit sieben Gegenkontakten eines von zwei gleichen, im Gerät untergebrachten, spiegelbildlich zur Wendeachse der Kassette angeordneten Gegenkontaktsätzen in Kontaktverbindung, über die der Datentransfer zu und von dem Halbleiterspeicher und die Spannungsversorgung des Halbleiterspeichers erfolgt. Zum Detektieren der jeweiligen Lage einer in ein Gerät eingesetzten Kassette ist eine Detektoreinrichtung vorgesehen, die an der Kassette in dem kassettenseitigen Kontaktsatz einen zusätzlichen achten Kontakt und im Gerät in jedem der beiden Gegenkontaktsätze einen zusätzlichen aus zwei Kontaktabschnitten bestehenden achten Gegenkontakt aufweist, dessen beide Kontaktabschnitte mit dem zusätzlichen achten Kontakt des kassettenseitigen Kontaktsatzes galvanisch miteinander verbindbar sind. Je nach der Lage einer Kassette im Gerät werden die beiden Kontaktabschnitte eines der beiden achten Gegenkontakte galvanisch miteinander verbunden, was mit einer Detektionsschaltung zur Detektion der jeweiligen Lage einer Kassette detektiert wird. Bei dem bekannten System sind somit zur Detektion der jeweiligen Lage einer Kassette sowohl bei dem kassettenseitigen Kontaktsatz als auch bei den beiden geräteseitigen Gegenkontaktsätzen je ein zusätzlicher Kontakt vorgesehen, was im Hinblick auf eine zweckmäßigerweise möglichst geringe Anzahl Kontakte ungünstig ist.

Die Erfindung hat sich zur Aufgabe gestellt, eine Detektion der jeweiligen Lage einer Kassette in einem Gerät zu ermöglichen, ohne daß hiefür zusätzliche Kontakte an der Kassette und im Gerät vorgesehen werden müssen. Hiefür ist die Erfindung dadurch gekennzeichnet, daß die Kontakte an der Kassette eine Zuordnung der Signale und Potentiale aufweisen, die beim Einsetzen der Kassette in das Gerät in einer Lage der Kassette gleich und in der anderen Lage der Kassette zumindest bei einem Teil der Kontakte ungleich zu der Zuordnung der Signale und Potentiale zu den mit den Kontakten an der Kassette in Kontaktverbindung tretenden Gegenkontakten im Gerät ist, daß im Gerät ein Datentransfer-Testbetrieb einschaltbar ist, bei dem ein Datentransfer zwischen der Schreib- und Leseeinrichtung und der Festkörperspeichereinrichtung versucht wird, daß die Detektoreinrichtung zum Ermitteln der jeweiligen Lage der Kassette eine Datentransfer-Detektorstufe aufweist, mit der ein bei gleichen Zuordnungen der Signale und Potentiale zu den in Kontaktverbindung getretenen Kontakten und Gegenkontakten beim Testbetrieb möglicher ordnungsgemäßer Datentransfer zwischen der Schreib- und Leseeinrichtung und der Festkörperspeichereinrichtung detektierbar ist, und daß die Detektoreinrichtung in Abhängigkeit vom jeweils mit der Datentransfer-Detektorstufe festgestellten Detektionsergebnis beim Testbetrieb eines von zwei je eine der beiden Lagen der Kassette kennzeichnenden Detektionssignalen abgibt. Auf diese Weise ist erreicht, daß die Detektion der jeweiligen Lage einer Kassette in einem Gerät nur unter Ausnützung der ohnehin vorgesehenen kassettenseitigen Kontakte und geräteseitigen Gegenkontakte ermöglicht ist, wobei keine zusätzlichen Kontakte für diese Detektion erforderlich sind, so daß mit einer möglichst geringen Anzahl Kontakte das Auslangen gefunden wird, was im Hinblick auf eine einfache, raumsparende Ausbildung und eine hohe Betriebssicherheit vorteilhaft ist.

Als vorteilhaft hat sich dabei erwiesen, wenn die von der Detektoreinrichtung abgegebenen Detektionssignale einer Anzeigeeinrichtung zur Anzeige der detektierten jeweiligen Lage der Kassette zuführbar sind. Auf diese Weise wird die jeweilige Lage der Kassette dem Benützer des Systems unmittelbar angezeigt, wobei diese Anzeige auf optische oder akustische Weise erfolgen kann.

Bei einem erfindungsgemäßen System, bei dem eine Kassette zwar wahlweise in zwei gewendeten Lagen in ein Gerät einsetzbar ist, jedoch nur in einer vorgegebenen Lage betrieben werden soll, wie dies beispielsweise bei bekannten Telefonanrufbeantwortersystemen und Sprachlehrsystemen der Fall ist, kann nach der erfindungsgemäßen Detektion der jeweiligen Lage und gegebenenfalls Anzeige derselben für den Fall, daß die in ein Gerät eingesetzte Kassette nicht die vorgegebene Lage im Gerät einnimmt, wobei dann die Kontakte an der Kassette und die mit diesen Kontakten in Kontaktverbindung getretenen Gegenkontakte im Gerät ungleiche Zuordnungen der Signale und Potentiale aufweisen und folglich kein Datentransfer zwischen der Schreib- und Leseeinrichtung und der Festkörperspeichereinrichtung möglich ist, die Kassette wieder aus dem Gerät entnommen werden und in ihrer gewendeten Lage neuerlich in das Gerät eingesetzt werden, wonach dann die Kontakte und die Gegenkontakte die gleichen Zuordnungen der Signale und Potentiale aufweisen und folglich ein ordnungsgemäßer Datentransfer zwischen der Schreib- und Leseeinrichtung und der Festkörperspeichereinrichtung gewährleistet ist. Ein erfindungsgemäßes System, bei dem eine Kassette in beiden gewendeten Lagen im Gerät betreibbar ist, ist demgegenüber dadurch gekennzeichnet, daß die Gegenkontakte, deren Zuordnung beim Einsetzen der Kassette in das Gerät in einer Lage der Kassette ungleich zu der Zuordnung zu den mit diesen Gegenkontakten in Kontaktverbindung tretenden Kontakten an der Kassette ist, über eine Umschalteinrichtung zum Umschalten der Zuordnung zu diesen Gegenkontakten anspeisbar sind, mit der bei ungleichen Zuordnungen zu diesen Gegenkontakten und zu den mit diesen in Kontaktverbindung getretenen Kontakten nach dem Einsetzen der Kassette in das Gerät die Verbindungen zu diesen Gegenkontakten zur Erzielung von gleichen Zuordnungen zu diesen Gegenkontakten und zu den mit diesen in Kontaktverbindung getretenen Kontakten umschaltbar sind. Auf diese Weise sind bei einem solchen erfindungsgemäßen System in jeder der beiden Lagen einer Kassette die gleichen Zuordnungen der Signale und Potentiale zu den Kontakten an der Kassette und zu den Gegenkontakten im Gerät erreichbar, so daß in beiden Lagen einer Kassette ein ordnungsgemäßer Datentransfer zwischen der Schreib- und Leseeinrichtung und der Festkörperspeichereinrichtung gewährleistet ist.

Die Umschalteinrichtung kann beispielsweise händisch steuerbar sein. Als vorteilhaft hat sich aber erwiesen, wenn die Umschalteinrichtung elektrisch steuerbar ist und von der Datentransfer-Detektorstufe her in Abhängigkeit vom jeweils festgestellten Detektionsergebnis beim Testbetrieb gesteuert wird. Auf diese Weise ist erreicht, daß die Umschalteinrichtung in Abhängigkeit vom jeweils festgestellten Detektionsergebnis der Datentransfer-Detektorstufe automatisch in die für einen ordnungsgemäßen Datentransfer zwischen der Schreib- und Leseeinrichtung und der Festkörperspeichereinrichtung erforderliche Schaltstellung gesteuert wird.

Bei einem erfindungsgemäßen System hat sich als vorteilhaft erwiesen, wenn an der Kassette zwei bezüglich der Wendeachse der Kassette spiegelbildlich angeordnete Kontaktsätze vorgesehen sind, deren Kontakte je mit den Anschlüssen der Festkörperspeichereinrichtung verbunden sind und von denen beim Einsetzen der Kassette in das Gerät die Kontakte eines Kontaktsatzes in einer Lage der Kassette und die Kontakte des anderen Kontaktsatzes in der anderen Lage der Kassette mit den Gegenkontakten eines einzigen gegenüber der Wendeachse der Kassette versetzt angeordneten Gegenkontaktsatzes im Gerät in Kontaktverbindung treten, und die Zuordnungen der Signale zu den für einen Datentransfer vorgesehenen Kontakten der beiden Kontaktsätze bezüglich der Wendeachse der Kassette spiegelbildlich ungleich sind und die Zuordnungen der Potentiale zu den für die Spannungsversorgung vorgesehenen Kontakten der beiden Kontaktsätze bezüglich der Wendeachse der Kassette spiegelbildlich gleich sind und die für einen Datentransfer vorgesehenen Gegenkontakte des Gegenkontaktsatzes über die Umschalteinrichtung mit den für einen Datentransfer vorgesehenen Signalanschlüssen der Schreib- und Leseeinrichtung und die für die Spannungsversorgung vorgesehenen Gegenkontakte des Gegenkontaktsatzes direkt mit den geräteseitigen Spannungsversorgungsanschlüssen verbunden sind. Auf diese Weise wird mit nur einem einzigen geräteseitigen Gegenkontaktsatz das Auslangen gefunden und ist zusätzlich eine hinsichtlich der Zufuhr der Versorgungsspannung zu der Festkörperspeichereinrichtung besonders einfache Ausbildung erreicht.

Bei einem erfindungsgemäßen System, hat sich auch als vorteilhaft erwiesen, wenn an der Kassette ein einziger Kontaktsatz vorgesehen ist, dessen Kontakte mit den Anschlüssen der Festkörperspeichereinrichtung verbunden sind und dessen für einen Datentransfer vorgesehene Kontakte und dessen für die Spannungsversorgung vorgesehene Kontakte je bezüglich der Wendeachse der Kassette spiegelbildlich angeordnet sind und dessen Kontakte beim Einsetzen der Kassette in das Gerät in beiden Lagen der Kassette mit den Gegenkontakten eines einzigen Gegenkontaktsatzes im Gerät in Kontaktverbindung treten, und sowohl die für einen Datentransfer vorgesehenen Gegenkontakte des Gegenkontaktsatzes als auch die für die Spannungsversorgung vorgesehenen Gegenkontakte des Gegenkontaktsatzes über die Umschalteinrichtung mit den für einen Datentransfer vorgesehenen Signalanschlüssen der Schreib- und Leseeinrichtung und mit den geräteseitigen Spannungsversorgungsanschlüssen verbunden sind. Auf diese Weise ist erreicht, daß an der Kassette nur ein einziger Kontaktsatz und im Gerät nur ein einziger Gegenkontaktsatz vorgesehen ist, was besonders einfach und preiswert ist.

Bei einem vorstehend angeführten System kann eine spezielle Festkörperspeichereinrichtung vorgesehen sein, die in sich Schutzmaßnahmen enthält, die sie gegen eine Beschädigung durch Anlegen einer falsch gepolten Versorgungsspannung schützen. Als besonders vorteilhaft hat sich aber erwiesen, wenn zwischen mindestens einen Versorgungsanschluß der Festkörperspeichereinrichtung und dem mit diesem verbundenen Kontakt des Kontaktsatzes an der Kassette eine Diode als Verpolungsschutz eingeschaltet ist. Eine solche Diode erfüllt eine Schutzfunktion gegenüber einer falsch gepolten Versorgungsspannung, so daß jede übliche Festkörperspeichereinrichtung, die keine internen Verpolungsschutzmaßnahmen enthält, vorgesehen werden kann.

Bei einem erfindungsgemäßen System hat sich weiters als vorteilhaft erwiesen, wenn an der Kassette ein einziger Kontaktsatz vorgesehen ist, dessen Kontakte mit den Anschlüssen der Festkörperspeichereinrichtung verbunden sind und der gegenüber der Wendeachse der Kassette versetzt angeordnet ist und dessen Kontakte beim Einsetzen der Kassette in das Gerät je nach der Lage der Kassette mit den Gegenkontakten eines von zwei bezüglich der Wendeachse der Kassette spiegelbildlich angeordneten Gegenkontaktsätzen im Gerät in Kontaktverbindung treten, und die für einen Datentransfer vorgesehenen Gegenkontakte eines Gegenkontaktsatzes, deren Zuordnung der Signale beim Einsetzen einer Kassette in das Gerät in einer Lage zu der Zuordnung der Signale zu den mit ihnen in Kontaktverbindung tretenden Kontakten gleich ist, direkt und die für einen Datentransfer vorgesehenen Gegenkontakte des anderen Gegenkontaktsatzes, deren Zuordnung der Signale beim Einsetzen einer Kassette in das Gerät in der anderen Lage zu der Zuordnung der Signale zu den mit ihnen in Kontaktverbindung tretenden Kontakten ungleich ist, über die Umschalteinrichtung mit den Signalanschlüssen der Schreib- und Leseeinrichtung verbunden sind und die für die Spannungsversorgung vorgesehenen Gegenkontakte der beiden Gegenkontaktsätze direkt mit den geräteseitigen Spannungsversorgungsanschlüssen verbunden sind. Auf diese Weise ist erreicht, daß an der Kassette nur ein einziger Kontaktsatz vorgesehen ist und daß zugleich die Zufuhr der Versorgungsspannung zu der Festkörperspeichereinrichtung auf besonders einfache Weise gelöst ist.

Die Festkörperspeichereinrichtung kann beispielsweise durch einen oder mehrere Halbleiterspeicher für paralleles Einschreiben und Auslesen von Datensignalen oder auch durch mehrere Halbleiterspeicher für serielles Einschreiben und Auslesen von Datensignalen gebildet sein. Als besonders vorteilhaft hat sich aber erwiesen, wenn die Festkörperspeichereinrichtung durch einen einzigen Halbleiterspeicher für serielles Einschreiben und Auslesen von Datensignalen gebildet ist, der zwei für einen Datentransfer vorgesehene Signalanschlüsse, die durch einen Signalanschluß für serielle Datensignale und einen Signalanschluß für ein Taktsignal gebildet sind, und zwei für die Spannungsversorgung vorgesehene Versorgungsanschlüsse aufweist, und an der Kassette mindestens ein Kontaktsatz mit vier mit den vier Anschlüssen des Halbleiterspeichers verbundenen Kontakten vorgesehen ist, dessen vier Kontakte beim Einsetzen einer Kassette in das Gerät mit vier Gegenkontakten eines im Gerät vorgesehenen Gegenkontaktsatzes in Kontaktverbindung treten. Auf diese Weise ist erreicht, daß jeder der erforderlichen kassettenseitigen Kontaktsätze eine minimale Anzahl Kontakte, nämlich nur vier Kontakte, aufweist.

Die Erfindung bezieht sich auch auf eine Kassette für ein erfindungsgemäßes System, die wahlweise in zwei um eine Wendeachse gewendeten Lagen in ein Gerät einsetzbar ist und in der ein Aufzeichnungsträger untergebracht ist und die zum Speichern von der Kassette zugeordneten Daten eine elektrisch ansprechbare Festkörperspeichereinrichtung enthält, die mindestens je einer der beiden Lagen der Kassette zuordenbare Speicherbereiche aufweist und die für einen Datentransfer zu und von der Festkörperspeichereinrichtung vorgesehene, eine vorgegebene Zuordnung von Signalen aufweisende Signalanschlüsse und für die Spannungsversorgung der Festkörperspeichereinrichtung vorgesehene, eine vorgegebene Zuordnung von Potentialen aufweisende Versorgungsanschlüsse aufweist, von denen die Signalanschlüsse der Festkörperspeichereinrichtung mit an der Kassette angebrachten, von außerhalb der Kassette zugänglichen, für einen Datentransfer vorgesehenen Kontakten verbunden sind und von denen die Versorgungsanschlüsse der Festkörperspeichereinrichtung mit an der Kassette angebrachten, von außerhalb der Kassette zugänglichen, für die Spannungsversorgung vorgesehenen Kontakten verbunden sind.

Eine solche Kassette ist aus der eingangs zitierten DE-PS 29 43 409 bekannt. Bei dieser Kassette weisen die an ihr vorgesehenen, mit den Anschlüssen der Festkörperspeichereinrichtung verbundenen Kontakte eine Zuordnung von Signalen und Potentialen auf, die in beiden Lagen der Kassette gleich zu der Zuordnung von Signalen und Potentialen zu den mit den Anschlüssen der geräteseitigen Schreib- und Leseeinrichtung und den geräteseitigen Spannungsversorgungsanschlüssen verbundenen Gegenkontakten ist. Aufgrund der in beiden Lagen der Kassette gleichen Zuordnungen der Signale und Potentiale zu den Kontakten und Gegenkontakten ist eine Detektion der jeweiligen Lage der Kassette unter Ausnützung der mit den Anschlüssen der Festkörperspeichereinrichtung verbundenen Kontakte an der Kassette nicht möglich.

Demgegenüber ist eine erfindungsgemäße Kassette dadurch gekennzeichnet, dass an der Kassette zwei bezüglich der Wendeachse der Kassette spiegelbildlich angeordnete Kontaktsätze vorgesehen sind, deren Kontakte je mit den Anschlüssen der Festkörperspeichereinrichtung verbunden sind, und dass die Zuordnungen der Signale zu den für einen Datentransfer vorgesehenen Kontakten der beiden Kontaktsätze bezüglich der Wendeachse der Kassette spiegelbildlich ungleich sind und die Zuordnungen der Potentiale zu den für die Spannungsversorgung vorgesehenen Kontakten der beiden Kontaktsätze bezüglich der Wendeachse der Kassette spiegelbildlich gleich sind. Bei einer solchen erfindungsgemässen Kassette sind die Zuordnungen der Signale und Potentiale zu den Kontakten an der Kassette und zu den mit diesen Kontakten in Kontaktverbindung tretenden Gegenkontakten im Gerät nur in einer Lage der Kassette gleich, hingegen in der anderen Lage der Kassette bei zumindest einem Teil der Kontakte und der mit diesen in Kontaktverbindung tretenden Gegenkontakte ungleich, wodurch ein Kriterium geschaffen ist, anhand dessen eine Detektion der jeweiligen Lage der Kassette erfolgen kann, ohne daß hiefür an der Kassette separate Kontakte oder andere Mittel erforderlich sind. Durch das Vorsehen von zwei Kontaktsätzen an der Kassette, deren Kontakte je mit den Anschlüssen der Festkörperspeichereinrichtung verbunden sind, ist vorteilhafterweise ermöglicht, daß, während die Kontakte eines dieser beiden Kontaktsätze mit den Gegenkontakten des geräteseitigen Gegenkontaktsatzes in Kontaktverbindung stehen, zugleich an die Kontakte des anderen der beiden Kontaktsätze eine Prüf- bzw. Testeinrichtung angeschlossen werden kann, mit der im Störungsfall eines ordnungsgemäßen Datentransfers zu und von der Festkörperspeichereinrichtung die Störungsursache ermittelt werden kann. Bei einer solchen Kassette mit zwei je einer der beiden Lagen der Kassette zugeordneten Kontaktsätzen an der Kassette, von denen in jeder Lage der Kassette nur ein Kontaktsatz in Kontaktverbindung mit dem geräteseitigen Gegenkontaktsatz steht, wird zusätzlich eine längere Lebensdauer der kassettenseitigen Kontakte erzielt.

Eine weitere erfindungsgemäße Kassette ist dadurch gekennzeichnet dass an der Kassette ein einziger Kontaktsatz vorgesehen ist, dessen Kontakte mit den Anschlüssen der Festkörperspeichereinrichtung verbunden sind und dessen für einen Datentransfer vorgesehene Kontakte und dessen für die Spannungsversorgung vorgesehene Kontakte je bezüglich der Wendeachse der Kassette spiegelbildlich angeordnet sind. Bei einer solchen erfindungsgemässen Kassette sind die Zuordnungen der Signale und Potentiale zu den Kontakten an der Kassette und zu den mit diesen Kontakten in Kontaktverbindung tretenden Gegenkontakten im Gerät nur in einer Lage der Kassette gleich, hingegen in der anderen Lage der Kassette bei zumindest einem Teil der Kontakte und der mit diesen in Kontaktverbindung tretenden Gegenkontakte ungleich, wodurch ein Kriterium geschaffen ist, anhand dessen eine Detektion der jeweiligen Lage der Kassette erfolgen kann, ohne daß hiefür an der Kassette separate Kontakte oder andere Mittel erforderlich sind. Eine solche Kassette weist nur einen einzigen Kontaktsatz auf, und die Kontakte dieses Kontaktsatzes können zufolge ihrer bezüglich der Wendeachse der Kassette spiegelbildlichen Anordnung relativ große Kontaktflächen aufweisen, was hinsichtlich einer toleranzunempfindlichen Kontaktgabe vorteilhaft ist.

Bei einer solchen Kassette hat sich als besonders vorteilhaft erwiesen, wenn zwischen mindestens einen Versorgungsanschluß der Festkörperspeichereinrichtung und dem mit diesem verbundenen Kontakt des Kontaktsatzes an der Kassette eine Diode als Verpolungsschutz eingeschaltet ist. Eine solche Diode erfüllt eine Schutzfunktion gegenüber einer falsch gepolten Versorgungsspannung für die Festkörperspeichereinrichtung, so daß jede übliche Festkörperspeichereinrichtung ohne interne Verpolungsschutzmaßnahmen in einer solchen Kassette vorgesehen werden kann.

Als besonders vorteilhaft hat sich bei einer erfindungsgemäßen Kassette erwiesen, wenn die Festkörperspeichereinrichtung durch einen einzigen Halbleiterspeicher für serielles Einschreiben und Auslesen von Datensignalen gebildet ist, der zwei für einen Datentransfer vorgesehene Signalanschlüsse, die durch einen Signalanschluß für serielle Datensignale und einen Signalanschluß für ein Taktsignal gebildet sind, und zwei für die Spannungsversorgung vorgesehene Versorgungsanschlüsse aufweist, und an der Kassette mindestens ein Kontaktsatz mit vier mit den vier Anschlüssen des Halbleiterspeichers verbundenen Kontakten vorgesehen ist. Auf diese Weise ist erreicht, daß der mindestens eine Kontaktsatz an der Kassette eine minimale Anzahl Kontakte, nämlich nur vier Kontakte, aufweist.

Ausführungsbeispiele eines Aufnahme- und/oder Wiedergabegeräts für das erfindungsgemässe System sind in den Ansprüchen enthalten die sich auf das Aufnahme- und/oder Wiedergabegerät richten.

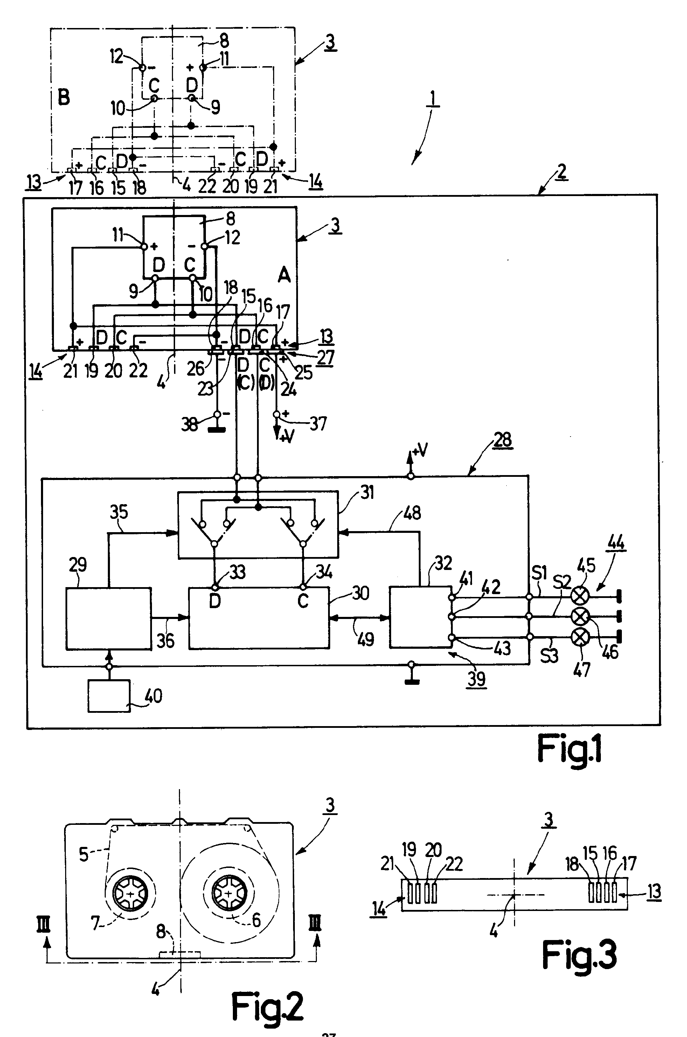

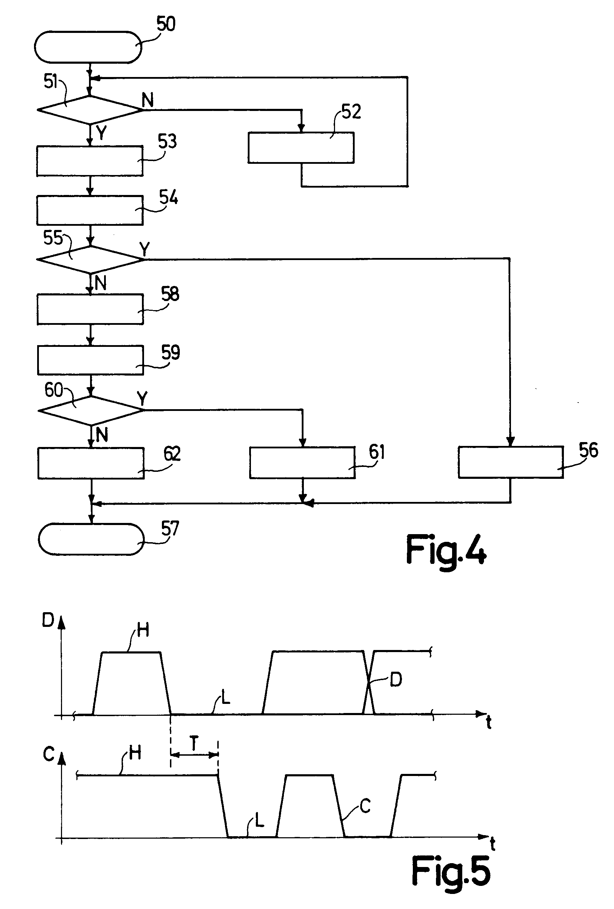

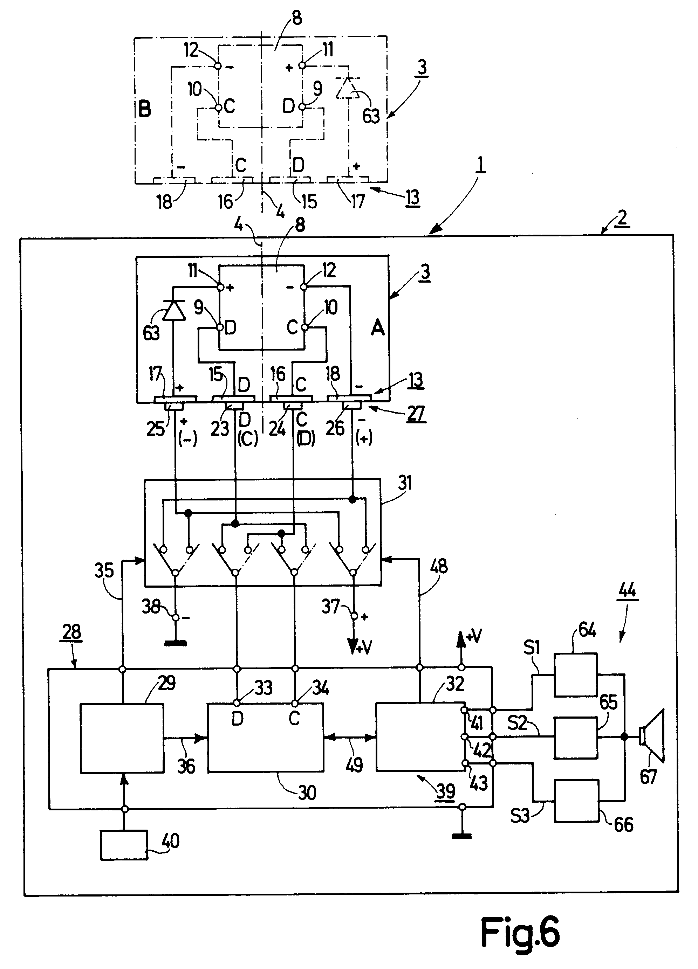

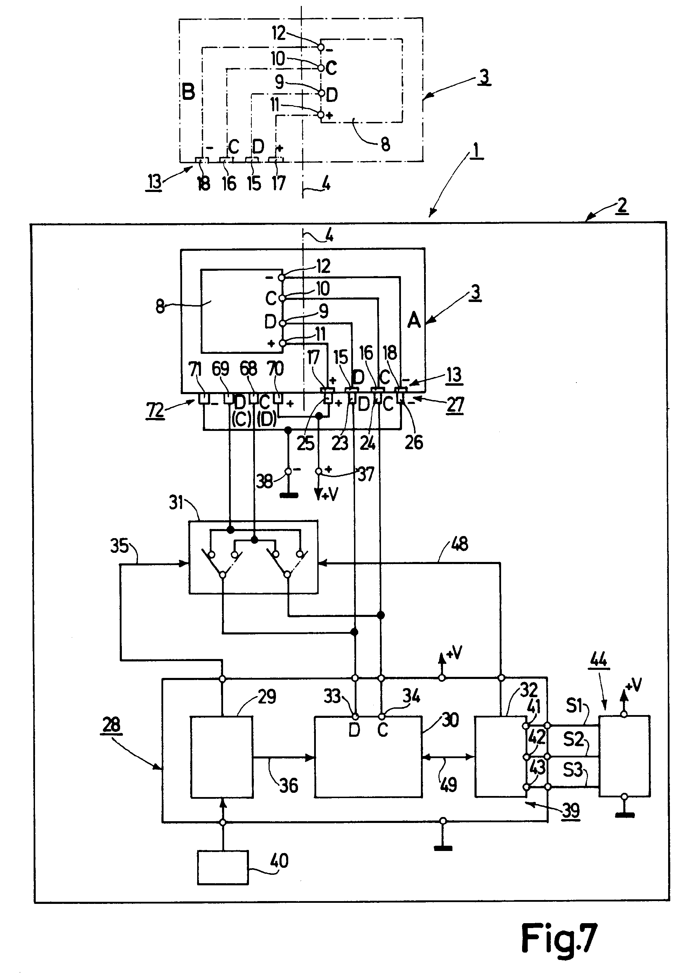

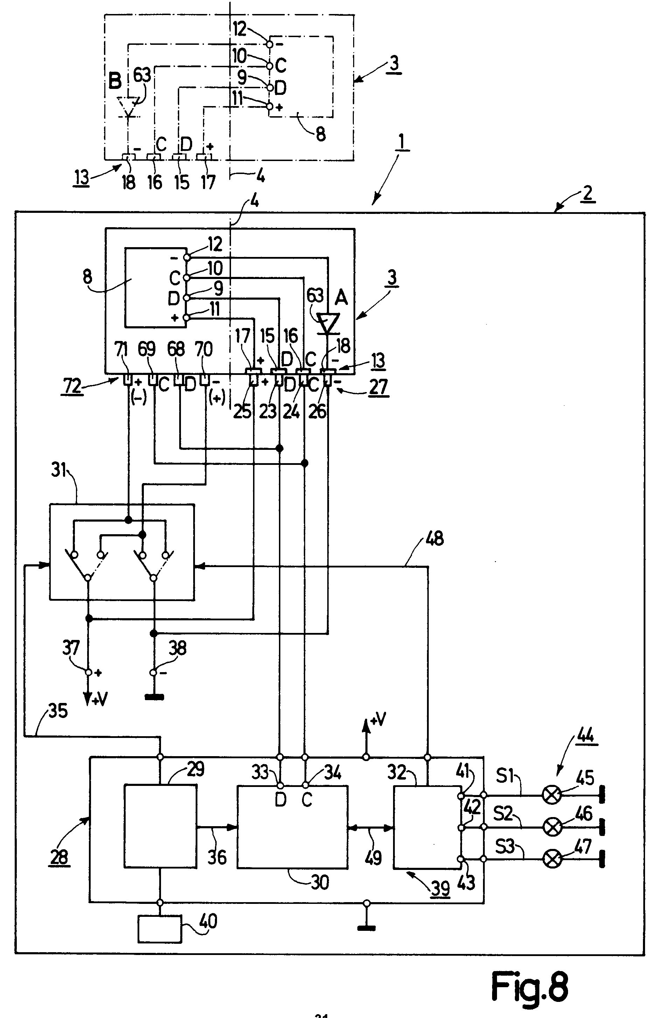

Die Erfindung wird im folgenden anhand von vier in den Zeichnungen dargestellten Ausführungsbeispielen, auf die die Erfindung jedoch nicht beschränkt sein soll, näher beschrieben. Die Fig.1 zeigt schematisch ein Aufzeichnungs- und Wiedergabesystem gemäß einem ersten Ausführungsbeispiel der Erfindung, bei dem in einem systemgemäßen Gerät nur ein bezüglich der Wendeachse einer systemgemäßen Kassette versetzt angeordneter Gegenkontaktsatz untergebracht ist und an der Kassette zwei bezüglich der Wendeachse spiegelbildlich an derselben angeordnete Kontaktsätze vorgesehen sind, wobei die Zuordnungen von Signalen zu den für einen Datentransfer vorgesehenen Kontakten der beiden Kontaktsätze bezüglich der Wendeachse der Kassette spiegelbildlich ungleich sind. Die Fig.2 zeigt schematisch in Draufsicht eine systemgemäße Kassette für das System gemäß Fig.1, die als Festkörperspeichereinrichtung einen einzigen Halbleiterspeicher enthält. Die Fig.3 zeigt schematisch in einer Seitenansicht entsprechend der Linie III-III in Fig.2 die systemgemäße Kassette gemäß Fig.2 mit ihren beiden Kontaktsätzen. Die Fig.4 zeigt ein Flußdiagramm eines Programmablaufes, der in einem im systemgemäßen Gerät des Systems gemäß Fig.1 enthaltenen Mikroprozessor zur Detektion der jeweiligen Lage einer in das Gerät eingesetzten Kassette abgearbeitet wird. Die Fig.5 zeigt die zeitlichen Abläufe eines seriellen Datensignales und eines Taktsignales, die zwischen einer Schreib- und Leseeinrichtung des Gerätes des Systems gemäß Fig.1 und dem Halbleiterspeicher in der Kassette des Systems gemäß Fig.1 austauschbar sind, wobei der Datenaustausch zwischen der Schreib- und Leseeinrichtung und dem Halbleiterspeicher über ein zwei Leitungen aufweisendes Leitungssystem gemäß einem vorgegebenen Protokoll erfolgt. Die Fig.6 zeigt schematisch ein Aufzeichnungs- und Wiedergabesystem gemäß einem zweiten Ausführungsbeispiel der Erfindung, bei dem im systemgemäßen Gerät nur ein Gegenkontaktsatz untergebracht ist und in einer systemgemäßen Kassette nur ein Kontaktsatz vorgesehen ist, wobei die für einen Datentransfer vorgesehenen Kontakte und Gegenkontakte und die für die Spannungsversorgung vorgesehenen Kontakte und Gegenkontakte je spiegelbildlich zur Wendeachse der Kassette angeordnet sind. Die Fig.7 zeigt ein Aufzeichnungs- und Wiedergabesystem gemäß einem dritten Ausführungsbeispiel der Erfindung, bei dem im systemgemäßen Gerät zwei bezüglich der Wendeachse der Kassette spiegelbildlich angeordnete Gegenkontaktsätze untergebracht sind und an der systemgemäßen Kassette nur ein gegenüber der Wendeachse der Kassette versetzt angeordneter Kontaktsatz vorgesehen ist, wobei die Zuordnungen von Signalen zu den für einen Datentransfer vorgesehenen Gegenkontakten der beiden geräteseitigen Gegenkontaktsätze bezüglich der Wendeachse der Kassette spiegelbildlich ungleich sind. Die Fig.8 zeigt ein Aufzeichnungs- und Wiedergabesystem gemäß einem vierten Ausführungsbeispiel der Erfindung, bei dem im systemgemäßen Gerät zwei bezüglich der Wendeachse der Kassette spiegelbildlich angeordnete Gegenkontaktsätze untergebracht sind und an der systemgemäßen Kassette nur ein gegenüber der Wendeachse der Kassette versetzt angeordneter Kontaktsatz vorgesehen ist, wobei die Zuordnungen von Potentialen zu den für die Spannungsversorgung vorgesehenen Gegenkontakten der beiden geräteseitigen Gegenkontaktsätze bezüglich der Wendeachse der Kassette spiegelbildlich ungleich sind.

Die Fig.1 zeigt die erfindungswesentlichen Teile eines Aufzeichnungs- und Wiedergabesystems 1, das aus einem Aufzeichnungs- und Wiedergabegerät 2 und einer Kassette 3 besteht, die wahlweise in zwei um eine Wendeachse 4 der Kassette 3 gewendeten Lagen in das Gerät 2 einsetzbar ist und in beiden Lagen in dem Gerät betreibbar ist. Die beiden gewendeten Lagen der Kassette sind in Fig.1 symbolisch mit A und B bezeichnet, wobei gemäß Fig.1 die in das Gerät 2 eingesetzte, mit vollen Linien dargestellte Kassette ihre Lage A einnimmt und die Kassette in ihrer gegenüber der Lage A gewendeten Lage B mit strichpunktierten Linien neben dem Gerät liegend dargestellt ist.

In der Kassette 3 ist ein durch ein Magnetband 5 gebildeter Aufzeichnungsträger untergebracht, der zwischen zwei nebeneinanderliegenden, rotierend antreibbaren Wickelkernen 6 und 7 verläuft und auf den beziehungsweise von dem mit Hilfe von geräteseitigen Magnetköpfen Informationssignale, beispielsweise Sprachsignale, aufgezeichnet und wiedergegeben werden können. Das Aufzeichnen und Wiedergeben der Informationssignale erfolgt je nach der Lage A bzw. B der Kassette in bzw. aus einer von zwei auf dem Magnetband 5 vorgesehenen Spuren, von denen jede Spur einer Lage A bzw. B der Kassette zugeordnet ist.

Zum Speichern von der Kassette zugeordneten Daten, beispielsweise von Daten über die gesamte Aufzeichnungskapazität des Magnetbandes, über die verbrauchte Magnetbandmenge in jeder Lage der Kassette oder über die Position bestimmter Bandstellen auf dem Magnetband in jeder Lage der Kassette, beispielsweise über die Enden von aufeinanderfolgend auf dem Magnetband aufgezeichneten Diktaten, enthält die Kassette 3 eine Festkörperspeichereinrichtung 8, die durch einen einzigen nichtflüchtigen Halbleiterspeicher gebildet ist, der für ein serielles Einschreiben und Auslesen von Datensignalen ausgebildet ist. Der Halbleiterspeicher 8 weist Speicherbereiche auf, die je einer der beiden Lagen A bzw. B der Kassette beim Einschreiben von Daten zuordenbar sind. Der Halbleiterspeicher 8 weist zwei für einen Datentransfer zu und von demselben vorgesehene, eine vorgegebene Zuordnung von Signalen aufweisende Signalanschlüsse 9 und 10 auf, die durch einen Signalanschluß 9 für serielle Datensignale D und einen Signalanschluß 10 für ein Taktsignal C gebildet sind. Dem Signalanschluß 9 sind somit die Datensignale D und dem Signalanschluß 10 ist das Taktsignal C zugeordnet. Ferner weist der Halbleiterspeicher 8 zwei für die Spannungsversorgung desselben vorgesehene, eine vorgegebene Zuordnung von Potentialen aufweisende Versorgungsanschlüsse 11 und 12 auf. Dem Versorgungsanschluß 11 ist dabei das positive Potential + einer Versorgungsgleichspannung und dem Versorgungsanschluß 12 ist das negative Potential - einer Versorgungsgleichspannung zugeordnet. Als nichtflüchtiger Halbleiterspeicher kann beispielsweise der von der Anmelderin unter der Typenbezeichnung PCF 8582 vertriebene, als EEPROM ausgebildete Baustein oder der von der Firma Xicor unter der Typenbezeichnung X 2402 vertriebene, ebenfalls als EEPROM ausgebildete Baustein vorgesehen sein.

An der Kassette 3 sind zwei bezüglich der Wendeachse 4 der Kassette spiegelbildlich angeordnete Kontaktsätze 13 und 14 vorgesehen, deren Kontakte 15, 16, 17 und 18 bzw. 19, 20, 21 und 22 je mit den Anschlüssen 9, 10, 11 und 12 des Halbleiterspeichers 8 verbunden sind. Wie aus Fig.1 ersichtlich, sind dabei die Zuordnungen der Signale D und C zu den für einen Datentransfer vorgesehenen, bezüglich der Wendeachse 4 der Kassette spiegelbildlich angeordneten Kontakten 15 und 16 bzw. 20 und 19 der beiden Kontaktsätze 13 und 14 bezüglich der Wendeachse 4 der Kassette spiegelbildlich ungleich und die Zuordnungen der Potentiale + und - zu den für die Spannungsversorgung vorgesehenen, bezüglich der Wendeachse 4 der Kassette spiegelbildlich angeordneten Kontakten 17 und 18 bzw. 21 und 22 der beiden Kontaktsätze 13 und 14 bezüglich der Wendeachse 4 der Kassette spiegelbildlich gleich gewählt.

Von den beiden Kontaktsätzen 13 und 14 an der Kassette 3 treten die Kontakte 15, 16, 17 und 18 des Kontaktsatzes 13 in der Lage A der Kassette und die Kontakte 20, 19, 21 und 22 des anderen Kontaktsatzes 14 in der anderen Lage B der Kassette mit den Gegenkontakten 23, 24, 25 und 26 eines einzigen gegenüber der Wendeachse 4 der Kassette versetzt angeordneten Gegenkontaktsatzes 27 im Gerät 2 in Kontaktverbindung. Die Kontakte der beiden Kontaktsätze 13 und 14 an der Kassette 3 weisen dabei je eine wie vorstehend bereits erläuterte Zuordnung der Signale D und C und Potentiale + und - auf, die beim Einsetzen der Kassette 3 in das Gerät in der Lage A der Kassette gleich und in der anderen Lage B der Kassette zumindest bei einem Teil der Kontakte ungleich zu der Zuordnung zu den mit den Kontakten an der Kassette in Kontaktverbindung tretenden Gegenkontakten im Gerät ist. In vorliegendem Fall sind in der anderen Lage B nur bei den für einen Datentransfer vorgesehenen Kontakten 20 und 19 und Gegenkontakten 23 und 24 die Zuordnungen der Signale D und C ungleich, wobei bei den für die Spannungsversorgung vorgesehenen Kontakten 21 und 22 und Gegenkontakten 25 und 26 die Zuordnungen der Potentiale + und - gleich sind. Es könnten aber in der Lage B der Kassette auch bei den für die Spannungsversorgung vorgesehenen Kontakten 21 und 22 und Gegenkontakten 25 und 26 die Zuordnungen der Potentiale + und - ungleich gewählt sein, dies in Kombination mit ungleichen Zuordnungen der Signale D und C, aber auch mit gleichen Zuordnungen der Signale D und C zu den für einen Datentransfer vorgesehenen Kontakten 20 und 19 und Gegenkontakten 23 und 24. Es könnten aber in der Lage B der Kassette auch bei einem für einen Datentransfer vorgesehenen Kontakt und einem für die Spannungsversorgung vorgesehenen Kontakt und bei den mit diesen beiden Kontakten in Kontaktverbindung getretenen beiden Gegenkontakten die Zuordnungen eines Signales und eines Potentiales ungleich gewählt sein.

Das Gerät 2 enthält einen Mikroprozessor 28, der beispielsweise durch den von der Anmelderin unter der Typenbezeichnung PCB 80C51 vertriebenen Mikroprozessor gebildet sein kann. Wie in Fig.1 schematisch dargestellt ist, sind mit Hilfe des Mikroprozessors 28 eine Steuereinrichtung 29, eine Schreib- und Leseeinrichtung 30, eine Umschalteinrichtung 31 und eine Datentransfer-Detektorstufe 32 gebildet. Der Mikroprozessor 28 erfüllt auch noch weitere Funktionen, worauf aber im folgenden nicht eingegangen ist, da diese im Zusammenhang mit der vorliegenden Erfindung nicht wesentlich sind.

Die Schreib- und Leseeinrichtung 30 ist zum Einschreiben und Auslesen von Daten in und aus den den beiden Lagen A und B der Kassette zuordenbaren Speicherbereichen des Halbleiterspeichers 8 in der Kassette 3 vorgesehen. Die Schreib- und Leseeinrichtung 30 weist zwei Signalanschlüsse 33 und 34 auf, die die gleiche Zuordnung der Signale D und C aufweisen wie die für einen Datentransfer vorgesehenen Signalanschlüsse 9 und 10 des Halbleiterspeichers 8. Die Signalanschlüsse 33 und 34 sind mit den für einen Datentransfer vorgesehenen Gegenkontakten 23 und 24 des Gegenkontaktsatzes 27 verbunden. Dabei sind die Gegenkontakte 23 und 24, deren Zuordnung der Signale D und C beim Einsetzen der Kassette 3 in das Gerät 2 in der Lage B der Kassette ungleich zu der Zuordnung der Signale D und C zu den mit diesen Gegenkontakten 23 und 24 in Kontaktverbindung tretenden Kontakten 20 und 19 an der Kassette ist, über die elektrisch steuerbare Umschalteinrichtung 31 anspeisbar. Die Umschalteinrichtung 31 ist zum Umschalten der Zuordnung der Signale D und C zu den Gegenkontakten 23 und 24 vorgesehen. Mit der Umschalteinrichtung 31 sind bei ungleichen Zuordnungen der Signale D und C zu den Gegenkontakten 23 und 24 und zu den mit diesen in Kontaktverbindung getretenen Kontakten 20 und 19 nach dem Einsetzen der Kassette in das Gerät die Verbindungen von den Signalanschlüssen 33 und 34 der Schreib- und Leseeinrichtung 30 zu den Gegenkontakten 23 und 24 zur Erzielung von gleichen Zuordnungen der Signale D und C zu den Gegenkontakten 23 und 24 und zu den mit diesen in Kontaktverbindung getretenen Kontakten 20 und 19 umschaltbar. Vor einem ersten Datentransferversuch zwischen der Schreib- und Leseeinrichtung 30 und dem Halbleiterspeicher 8 beziehungsweise auch schon vor dem Einsetzen einer Kassette in das Gerät wird die elektrisch steuerbare Umschalteinrichtung 31 von der Steuereinrichtung 29 über eine Steuerverbindung 35 in die in Fig.1 mit vollen Linien dargestellte Schaltstellung gesteuert. Zum Steuern des Betriebes der Schreib- und Leseeinrichtung 30 ist diese von der Steuereinrichtung 29 über eine Steuerverbindung 36 steuerbar.

Im Gerät 2 ist eine Gleichspannungsquelle +V vorgesehen. Sie versorgt den Mikroprozessor 28 gleichspannungsmäßig. Ferner ist die Gleichspannungsquelle +V mit ihrem positiven Potential + an einen ersten geräteseitigen Spannungsversorgungsanschluß 37 und mit ihrem negativen Potential - an einen zweiten geräteseitigen Spannungsversorgungsanschluß 38 angeschlossen. Die beiden Spannungsversorgungsanschlüsse 37 und 38 sind mit den beiden für die Spannungsversorgung vorgesehenen Gegenkontakten 25 und 26 des Gegenkontaktsatzes 27 verbunden und weisen die gleiche Zuordnung der Potentiale + und - wie die Versorgungsanschlüsse 11 und 12 des Halbleiterspeichers 8 auf.

Im Gerät 2 ist eine Detektoreinrichtung 39 zum Ermitteln der jeweiligen Lage A bzw. B einer in das Gerät eingesetzten Kassette 3 vorgesehen, die die bereits erwähnte Datentransfer-Detektorstufe 32 aufweist. Zum Ermitteln der jeweiligen Lage A bzw. B der Kassette 3 im Gerät 2 ist nach dem Einsetzen der Kassette in das Gerät mit der Detektoreinrichtung 39 in dem Gerät ein Datentransfer-Testbetrieb einschaltbar, bei dem ein Datentransfer zwischen der Schreib- und Leseeinrichtung 30, die beim Testbetrieb einen Teil der Detektoreinrichtung 39 bildet, und dem Halbleiterspeicher 8 versucht wird. Bei dem Testbetrieb wird beispielsweise versucht, ob die Schreib- und Leseeinrichtung 30 ein an sich beliebig gewähltes Datensignal in den Halbleiterspeicher 8 einschreiben kann. Zum Auslösen des Detektionsvorganges zum Ermitteln der jeweiligen Lage der Kassette weist die Detektoreinrichtung 39 eine Taste 40 auf, deren Betätigung von der Steuereinrichtung 29, die beim Testbetrieb ebenfalls einen Teil der Detektoreinrichtung 39 bildet, festgestellt und ausgewertet wird. Die Steuereinrichtung 29 aktiviert nach einer Betätigung der Taste 40 über die Steuerverbindung 36 die Schreib- und Leseeinrichtung 30 zur Durchführung des Datentransfer-Testbetriebes zu dem Halbleiterspeicher 8. Der Detektionsvorgang zum Ermitteln der jeweiligen Lage der Kassette kann auch automatisch durch das Einsetzen einer Kassette in das Gerät ausgelöst werden.

Mit der Datentransfer-Detektorstufe 32 ist ein bei gleichen Zuordnungen der Signale D und C und Potentiale + und - zu den in Kontaktverbindung getretenen Kontakten und Gegenkontakten beim Testbetrieb möglicher ordnungsgemäßer Datentransfer zwischen der Schreib- und Leseeinrichtung 30 und dem Halbleiterspeicher 8 detektierbar, worauf nachfolgend noch näher eingegangen ist. Die Datentransfer-Detektorstufe 32 weist in diesem Fall drei Ausgänge 41, 42 und 43 auf. An den beiden Ausgängen 41 und 42 gibt die Datentransfer-Detektorstufe 32 in Abhängigkeit vom jeweils festgestellten Detektionsergebnis beim Testbetrieb eines von zwei je eine der beiden Lagen A und B der Kassette kennzeichnenden Detektionssignalen S1 und S2 ab. An dem dritten Ausgang 43 gibt die Datentransfer-Detektorstufe 32 in Abhängigkeit vom festgestellten Detektionsergebnis beim Testbetrieb ein weiteres Detektionssignal S3 ab, das das Vorhandensein einer nichtsystemgemäßen, keinen Halbleiterspeicher enthaltenden Kassette im Gerät bzw. das Fehlen einer Kassette im Gerät kennzeichnet. Die von der Datentransfer-Detektorstufe 32 abgegebenen Detektionssignale S1, S2 und S3 sind Gleichspannungssignale mit positivem Potential. Die Erzeugung der Detektionssignale S1, S2 und S3 kann auch in einer separaten in Abhängigkeit vom jeweils mit der Datentransfer-Detektorstufe 32 festgestellten Detektionsergebnis beim Testbetrieb gesteuerten Detektionssignal-Erzeugungsstufe der Detektoreinrichtung 39 erfolgen, die mit Hilfe des Mikroprozessors 28 realisiert ist.

Die Detektionssignale S1, S2 und S3 werden einer Anzeigeeinrichtung 44 zur Anzeige der detektierten jeweiligen Lage A bzw. B der Kassette und der Anwesenheit einer nichtsystemgemäßen Kassette bzw. der Abwesenheit einer Kassette zugeführt. Die Anzeigeeinrichtung 44 besteht in vorliegendem Fall aus drei an die Ausgänge 41, 42 und 43 der Datentransfer-Detektorstufe 32 angeschlossene, symbolisch dargestellte optische Anzeigeelemente, die beispielsweise durch lichtemittierende Dioden gebildet sind.

Zwischen der Datentransfer-Detektorstufe 32 und der Umschalteinrichtung 31, die beim Datentransfer-Testbetrieb ebenfalls einen Teil der Detektoreinrichtung 39 bildet, ist eine Steuerverbindung 48 vorgesehen, über die die Umschalteinrichtung 31 von der Datentransfer-Detektorstufe 32 her in Abhängigkeit vom jeweils festgestellten Detektionsergebnis beim Testbetrieb steuerbar ist. Wenn die Datentransfer-Detektorstufe 32 einen ordnungsgemäßen Datentransfer zwischen der Schreib- und Leseeinrichtung 30 und dem Halbleiterspeicher 8 detektiert, dann erfolgt über die Steuerverbindung 48 kein Umschalten der Umschalteinrichtung 31. Wird aber von der Datentransfer-Detektorstufe 32 festgestellt, daß im Zuge des Testbetriebes kein ordnungsgemäßer Datentransfer möglich war, dann erfolgt über die Steuerverbindung 48 ein Umschalten der Umschalteinrichtung 31.

Wie bereits erwähnt, können beispielsweise als Mikroprozessor der Typ PCB 80C51 von der Anmelderin und als Halbleiterspeicher der Typ X 2402 von der Firma Xicor im System gemäß Fig.1 vorgesehen sein. Diese elektronischen Bausteine sind über ein zwei Leitungen aufweisendes Leitungssystem zum Datentransfer verbunden, wobei der Datentransfer gemäß einem vorgegebenen Protokoll erfolgt. Gemäß diesem Protokoll ist, wie dies auszugsweise in Fig.5 dargestellt ist, festgelegt, daß vor jedem Datentransfer von einem Meister zu einem Sklaven vom Meister dessen für die Datensignale D vorgesehener Signalanschluß um eine vorgegebene Zeitspanne T vor dessen für das Taktsignal C vorgesehenen Signalanschluß von einem höheren Potential H auf ein niedrigeres Potential L umgeschaltet werden muß. Dieses Umschalten gemäß vorstehender Bedingung wird vom Sklaven detektiert, wobei nur bei einem positiven Detektionsergebnis im Sklaven dieser zu ihm vom Meister her übertragene Daten annimmt und nach dieser Annahme ein Quittierungssignal zu dem Meister zurücksendet. Wenn das Umschalten gemäß vorstehender Bedingung beim Sklaven nicht auftritt, was beispielsweise dann der Fall ist, wenn die vom Meister abgegebenen Datensignale D dem für das Taktsignal C vorgesehenen Signalanschluß des Sklaven und das vom Meister abgegebene Taktsignal C dem für die Datensignale D vorgesehenen Signalanschluß des Sklaven zugeführt werden, hat dies im Sklaven ein negatives Detektionsergebnis zur Folge. Dieses negative Detektionsergebnis hat wiederum zur Folge, daß der Sklave kein wie vorstehend erwähntes Quittierungssignal zu dem Meister zurücksendet. Dieses Quittierungssignal ist somit ein Kennzeichen dafür, ob ein ordnungsgemäßer Datentransfer zwischen einem Meister und einem Sklaven stattgefunden hat. Aus diesem Grunde wird bei vorliegendem System gemäß Fig.1 das Auftreten des vom Halbleiterspeicher 8 als Sklaven zur Schreib- und Leseeinrichtung 30 als Meister zurückgesendeten Quittierungssignales von der über eine Verbindung 49 mit der Schreib- und Leseeinrichtung 30 verbundenen Datentransfer-Detektorstufe 32 überwacht. Dieses Quittierungssignal tritt nur dann auf, wenn die Zuordnungen der Signale und Potentiale zu den Kontakten an der Kassette und zu den Gegenkontakten im Gerät gleich sind, es tritt aber nicht auf, wenn diese Zuordnungen auch nur bei einem Teil der Kontakte und Gegenkontakte ungleich sind, weil dann kein ordnungsgemäßer Datentransfer möglich ist.

Im folgenden ist anhand der Fig.4 ein Flußdiagramm eines Programmablaufes beschrieben, der im Mikroprozessor 28 des Gerätes 2 des Systems 1 zum Ermitteln der jeweiligen Lage A bzw. B einer Kassette 3 durchlaufen wird. Beim Block 50 wird dieser Programmablauf gestartet. Danach wird beim Block 51 mit der Steuereinrichtung 29 geprüft, ob die Taste 40 zum Auslösen des Detektionsvorganges zum Ermitteln der jeweiligen Lage der Kassette betätigt wurde. Wenn dies nicht der Fall ist, wird der Programmablauf beim Block 52 fortgesetzt, der stellvertretend für eine Vielzahl weiterer Programmschritte steht. Nach dem Block 52 wird der Programmablauf neuerlich beim Block 51 fortgesetzt. Wenn beim Block 51 eine Betätigung der Taste 40 festgestellt wird, dann wird danach beim Block 53 die Umschalteinrichtung 31 über die Steuerverbindung 35 von der Steuereinrichtung 29 in ihre in Fig.1 mit vollen Linien dargestellte Schaltstellung geschaltet, soferne sie diese Schaltstellung nicht ohnehin schon einnimmt. Danach wird beim Block 54 die Schreib- und Leseeinrichtung 30 über die Steuerverbindung 36 von der Steuereinrichtung 29 zur Durchführung eines Datentransfer-Testbetriebes zu dem Halbleiterspeicher 8 aktiviert, wobei die Schreib- und Leseeinrichtung 30 versucht, ein Datensignal in den Halbleiterspeicher 8 einzuschreiben. Danach wird beim Block 55 mit der Datentransfer-Detektorstufe 32 durch Überwachen des vorstehend erwähnten Quittierungssignales des Halbleiterspeichers 8 geprüft, ob ein ordnungsgemäßer Datentransfer zwischen der Schreib- und Leseeinrichtung 30 und dem Halbleiterspeicher 8 möglich war. Wenn dies der Fall ist, wobei dann die Zuordnungen der Signale D und C und Potentiale + und - zu den Kontakten an der Kassette und zu den Gegenkontakten im Gerät gleich sind, also die in das Gerät eingesetzte Kassette ihre Lage A einnimmt, dann gibt danach beim Block 56 die Datentransfer-Detektorstufe 32 an ihrem Ausgang 41 das Detektionssignal S1 ab, das das optische Anzeigeelement 45 zum Leuchten bringt. Durch das Leuchten des Anzeigeelementes 45 wird angezeigt, daß die in das Gerät eingesetzte Kassette ihre Lage A einnimmt. Nach dem Block 56 wird der Programmablauf beim Block 57 beendet.

Wenn beim Block 55 mit der Datentransfer-Detektorstufe 32 festgestellt wird, daß der Halbleiterspeicher 8 kein Quittierungssignal abgegeben hat, also kein ordnungsgemäßer Datentransfer möglich war, dann wird nachfolgend beim Block 58 die Umschalteinrichtung 31 über die Steuerverbindung 48 von der Datentransfer-Detektorstufe 32 in Abhängigkeit von dem zuvor festgestellten negativen Detektionsergebnis in ihre in Fig.1 mit strichpunktierten Linien dargestellte Schaltstellung umgeschaltet, wodurch die Zuordnung der Signale D und C zu den Gegenkontakten 23 und 24 umgeschaltet wird. Danach wird beim Block 59 die Schreib- und Leseeinrichtung 30 über die Verbindung 49 von der Datentransfer-Detektorstufe 32 neuerlich zur Durchführung eines Datentransfer-Testbetriebes aktiviert. Danach wird beim Block 60 mit der Datentransfer-Detektorstufe 32 wieder geprüft, ob ein ordnungsgemäßer Datentransfer zwischen der Schreib- und Leseeinrichtung 30 und dem Halbleiterspeicher 8 möglich war. Wenn dies der Fall ist, wobei dann die Zuordnungen der Signale D und C und Potentiale + und - zu den Kontakten an der Kassette und Gegenkontakten im Gerät gleich sind, also die in das Gerät eingesetzte Kassette ihre Lage B einnimmt, dann gibt danach beim Block 61 die Datentransfer-Detektorstufe 32 an ihrem Ausgang 42 das Detektionssignal S2 ab, das das optische Anzeigeelement 46 zum Leuchten bringt. Durch das Leuchten des Anzeigeelementes 46 wird angezeigt, daß die in das Gerät eingesetzte Kassette ihre Lage B einnimmt. Nach dem Block 61 wird der Programmablauf ebenfalls beim Block 57 beendet.

Wenn beim Block 60 mit der Datentransfer-Detektorstufe 32 festgestellt wird, daß kein ordnungsgemäßer Datentransfer möglich war, dann ist keine systemgemäße Kassette mit einem Halbleiterspeicher und mit dessen Anschlüssen verbundenen Kontakten, sondern eine an sich gleich ausgebildete, aber ohne Halbleiterspeicher und ohne mit dessen Anschlüssen verbundene Kontakte ausgerüstete Kassette in das Gerät eingesetzt oder es befindet sich sich überhaupt keine Kassette in dem Gerät. In diesem Fall gibt danach beim Block 62 die Datentransfer-Detektorstufe 32 an ihrem Ausgang 43 das Detektionssignal S3 ab, das das Anzeigeelement 47 zum Leuchten bringt. Durch das Leuchten des Anzeigeelementes 47 wird angezeigt, daß es sich bei der in das Gerät eingesetzten Kassette um keine systemgemäße Kassette handelt beziehungsweise daß in das Gerät überhaupt keine Kassette eingesetzt ist.

Die von der Datentransfer-Detektorstufe 32 abgegebenen Detektionssignale S1, S2 und S3 werden nicht nur den Anzeigeelementen 45, 46 und 47 zugeführt, sondern auch weiteren geräteseitigen Einrichtungen, etwa dem Mikroprozessor 28 selbst, um diese geräteseitigen Einrichtungen in Abhängigkeit von der detektierten jeweiligen Lage einer in das Gerät eingesetzten Kassette zu steuern beziehungsweise zu beeinflussen. In diesem Zusammenhang ist festzuhalten, daß beim Einschreiben von Daten in den Halbleiterspeicher, die nur einer Lage der Kassette zugeordnet sind, die einzuschreibenden Daten mit einer Kennzeichnung versehen werden müssen, die die Zuordnung der einzuschreibenden Daten zu der betreffenden Lage der Kassette angibt. Entsprechend den beiden Lagen der Kassette sind zwei solche Kennzeichnungen erforderlich. Diese beiden Kennzeichnungen können beispielsweise in Abhängigkeit von den beiden Ausgangssignalen S1 und S2 der Datentransfer-Detektorstufe 32, also in Abhängigkeit von der ermittelten jeweiligen Lage A bzw. B der Kassette, in der Schreib- und Leseeinrichtung 30 des Mikroprozessors 28 erzeugt werden.

Beim vorliegenden System gemäß Fig.1 sind die zum Ermitteln der jeweiligen Lage einer Kassette in dem Gerät des Systems erforderlichen Einrichtungen Bestandteile eines ohnehin im Gerät vorgesehenen Mikroprozessors, so daß zur Ermittlung der jeweiligen Lage der Kassette praktisch keine zusätzlichen Einrichtungen erforderlich sind. Die beiden Kontaktsätze an der Kassette und der Gegenkontaktsatz im Gerät weisen nur die für einen Datentransfer erforderlichen und die für die Spannungsversorgung erforderlichen Kontakte und Gegenkontakte auf, wobei aufgrund der erfindungsgemäßen Zuordnung der Signale zu den für einen Datentransfer vorgesehenen Kontakten der beiden Kontaktsätze an der Kassette, die in einer Lage der Kassette gleich und in der anderen Lage der Kassette ungleich zu der Zuordnung der Signale zu den für einen Datentransfer vorgesehenen Gegenkontakten des Gegenkontaktsatzes ist, ein Kriterium geschaffen ist, anhand dessen die jeweilige Lage der Kassette detektiert werden kann, ohne daß hiefür separate Kontakte an der Kassette und Gegenkontakte im Gerät erforderlich sind, was im Hinblick auf eine möglichst geringe Anzahl Kontakte der beiden Kontaktsätze und des Gegenkontaktsatzes vorteilhaft ist. Durch das Vorsehen von zwei Kontaktsätzen an der Kassette ist vorteilhafterweise ermöglicht, daß an den jeweils nicht mit dem geräteseitigen Gegenkontaktsatz in Kontaktverbindung stehenden Kontaktsatz auf einfache Weise eine Prüf- bzw. Testeinrichtung angeschlossen werden kann, um im Störungsfall eines ordnungsgemäßen Datentransfers gegebenenfalls die Störungsursache ermitteln zu können. Im Gerät ist vorteilhafterweise nur ein einziger Gegenkontaktsatz vorgesehen, was im Hinblick auf eine einfache Ausbildung des Gerätes günstig ist. Die Gleichspannungsquelle im Gerät ist über die Spannungsversorgunganschlüsse direkt mit den zur Spannungsversorgung vorgesehenen Gegenkontakten des Gegenkontaktsatzes verbunden, was hinsichtlich einer besonders einfachen Zufuhr der Versorgungsspannung zu dem Halbleiterspeicher vorteilhaft ist.

Bei dem in Fig.6 dargestellten Aufzeichnungs- und Wiedergabesystem 1 ist an der Kassette 3 ein einziger Kontaktsatz 13 vorgesehen, dessen Kontakte 15, 16, 17 und 18 mit den Anschlüssen 9, 10, 11 und 12 des Halbleiterspeichers 8 verbunden sind und dessen für einen Datentransfer vorgesehene Kontakte 15 und 16 und dessen für die Spannungsversorgung vorgesehene Kontakte 17 und 18 je bezüglich der Wendeachse 4 der Kassette 3 spiegelbildlich angeordnet sind. Die Kontakte 15, 16, 17 und 18 des kassettenseitigen Kontaktsatzes 13 treten beim Einsetzen einer Kassette in das Gerät in beiden Lagen A und B der Kassette mit den Gegenkontakten 23, 24, 25 und 26 eines einzigen Gegenkontaktsatzes 27 im Gerät in Kontaktverbindung, dessen für einen Datentransfer vorgesehene Gegenkontakte 23 und 24 und dessen für die Spannungsversorgung vorgesehene Gegenkontakte 25 und 26 ebenfalls je bezüglich der Wendeachse 4 der Kassette 3 spiegelbildlich angeordnet sind. In diesem Fall weisen die Kontakte 15, 16, 17 und 18 des Kontaktsatzes 13 an der Kassette eine Zuordnung der Signale D und C und Potentiale + und - auf, die beim Einsetzen der Kassette in das Gerät in der Lage A der Kassette gleich und in der anderen Lage B der Kassette bei allen Kontakten 15, 16, 17 und 18 ungleich zu der Zuordnung der Signale D und C und Potentiale + und - zu den mit den Kontakten 15, 16, 17 und 18 des Kontaktsatzes 13 in Kontaktverbindung tretenden Gegenkontakten 23, 24, 25 und 26 des Gegenkontaktsatzes 27 im Gerät ist. Durch die beim Einsetzen der Kassette in das Gerät in der Lage A gleichen und in der Lage B ungleichen Zuordnungen der Signale D und C und Potentiale + und - zu den Kontakten und Gegenkontakten ist ebenso wie beim System gemäß Fig.1 ein Kriterium geschaffen, anhand dessen die Detektion der jeweiligen Lage A bzw. B der Kassette im Gerät erfolgen kann. Der Detektionsvorgang zur Ermittlung der jeweiligen Lage der Kassette kann beim System gemäß Fig.6 in vollkommen gleicher Weise erfolgen, wie dies beim System gemäß Fig.1 detailliert beschrieben ist.

Aufgrund der beim Einsetzen einer Kassette 3 in das Gerät 2 in der Lage B ungleichen Zuordnungen der Potentiale + und - zu den für die Spannungsversorgung vorgesehenen Kontakten 17 und 18 an der Kassette und den Gegenkontakten 25 und 26 im Gerät würde ohne separate Maßnahmen an den Versorgungsanschlüssen 11 und 12 des Halbleiterspeichers 8 eine falsch gepolte Versorgungsspannung anliegen. Um dies zu verhindern, ist zwischen den Versorgungsanschluß 11 des Halbleiterspeichers 8 und dem mit diesem verbundenen Kontakt 17 des Kontaktsatzes 13 an der Kassette eine Diode 63 als Verpolungsschutz eingeschaltet, die verhindert, daß an den Versorgungsanschlüssen 11 und 12 des Halbleiterspeichers 8 eine falsch gepolte Versorgungsspannung anliegt und den Halbleiterspeicher beschädigt.

Beim Gerät 2 des Systems gemäß Fig.6 sind mit Hilfe des Mikroprozessors 28 die Steuereinrichtung 29, die Schreib- und Leseeinrichtung 30 und die Datentransfer-Detektorstufe 32 realisiert. In Abwandlung gegenüber dem System in Fig.1 ist beim System gemäß Fig.6 die Umschalteinrichtung 31 nicht mit Hilfe des Mikroprozessors 28 realisiert, sondern separat ausgebildet. Über die Umschalteinrichtung 31 sind bei vorliegendem Gerät 2 des Systems gemäß Fig.6 sowohl die für einen Datentransfer vorgesehenen Gegenkontakte 23 und 24 des Gegenkontaktsatzes 27 als auch die für die Spannungsversorgung vorgesehenen Gegenkontakte 25 und 26 des Gegenkontaktsatzes 27 mit den für einen Datentransfer vorgesehenen Signalanschlüssen 33 und 34 der Schreib- und Leseeinrichtung 30 und mit den geräteseitigen Spannungsversorgungsanschlüssen 37 und 38 verbunden. Auf diese Weise ist sowohl die Zuordnung der Signale D und C zu den für einen Datentransfer vorgesehenen Gegenkontakten 23 und 24 als auch die Zuordnung der Potentiale + und - zu den für die Spannungsversorgung vorgesehenen Gegenkontakten 25 und 26 umschaltbar so daß in beiden Lagen A und B der Kassette gleiche Zuordnungen der Signale D und C und Potentiale + und - zu den Kontakten 15, 16, 17 und 18 an der Kassette und zu den Gegenkontakten 23, 24, 25 und 26 im Gerät erreichbar sind.

Beim Gerät 2 des Systems gemäß Fig.6 ist zur Anzeige der detektierten jeweiligen Lage A bzw. B der Kassette eine akustisch ausgebildete Anzeigeeinrichtung 44 vorgesehen. Die Anzeigeeinrichtung 44 weist drei Signalgeneratoren 64, 65 und 66 zur Erzeugung sinusförmiger Signale mit voneinander unterschiedlichen Frequenzen auf, die in Abhängigkeit von den von der Datentransfer-Detektorstufe 32 abgegebenen Detektionssignalen S1, S2 und S3 einschaltbar sind. Die sinusförmigen Signale der Signalgeneratoren 64, 65 und 66 werden einem Lautsprecher 67 der Anzeigeeinrichtung 44 zur akustischen Wiedergabe zugeführt, wobei aus den unterschiedlichen Tonhöhen der wiedergegebenen Töne die detektierte jeweilige Lage A bzw. B der Kassette und die Anwesenheit einer nichtsystemgemäßen Kassette im Gerät beziehungsweise das Fehlen einer Kassette im Gerät erkennbar ist.

Bei vorstehend beschriebenem System gemäß Fig.6 ist an der Kassette nur ein einziger Kontaktsatz und im Gerät nur ein einziger Gegenkontaktsatz vorgesehen, was besonders einfach und preiswert ist. Infolge der bezüglich der Wendeachse der Kassette spiegelbildlichen Anordnung der Kontakte an der Kassette und der Gegenkontakte im Gerät können die Mitten der Kontakte und Gegenkontakte relativ große Abstände voneinander und die Kontakte und Gegenkontakte relativ große Kontaktflächen aufweisen, was hinsichtlich einer von Toleranzen unabhängigen sicheren Kontaktgabe zwischen den Kontakten und den Gegenkontakten vorteilhaft ist.

Bei dem in Fig.7 dargestellten Aufzeichnungs- und Wiedergabesystem 1 ist an der Kassette 3 vorteilhafterweise nur ein einziger Kontaktsatz 13 vorgesehen, dessen Kontakte 15, 16, 17 und 18 mit den Anschlüssen 9, 10, 11 und 12 des Halbleiterspeichers 8 verbunden sind und der gegenüber der Wendeachse 4 der Kassette 3 versetzt angeordnet ist. Die Kontakte 15, 16, 17 und 18 des Kontaktsatzes 13 an der Kassette 3 treten beim Einsetzen der Kassette in das Gerät 2 je nach der Lage A bzw. B der Kassette mit den Gegenkontakten 23, 24, 25 und 26 bzw. 68, 69, 70 und 71 eines von zwei bezüglich der Wendeachse 4 der Kassette spiegelbildlich angeordneten Gegenkontaktsätzen 27 und 72 im Gerät in Kontaktverbindung. In diesem Fall weisen die Kontakte 15, 16, 17 und 18 des Kontaktsatzes 13 an der Kassette 3 eine Zuordnung der Signale D und C und Potentiale + und - auf, die beim Einsetzen der Kassette in das Gerät in der Lage A der Kassette gleich und in der anderen Lage B der Kassette bei den für einen Datentransfer vorgesehenen Kontakten 15 und 16 ungleich zu der Zuordnung der Signale D und C und Potentiale + und - zu den mit den Kontakten 15, 16, 17 und 18 des Kontaktsatzes 13 in Kontaktverbindung tretenden Gegenkontakten 68, 69, 70 und 71 des Gegenkontaktsatzes 72 im Gerät ist. Durch die beim Einsetzen einer Kassette in das Gerät in der Lage A gleichen und in der Lage B ungleichen Zuordnungen der Signale D und C zu den für einen Datentransfer vorgesehenen Kontakten 15 und 16 und Gegenkontakten 23 und 24 bzw. 68 und 69, ist ebenso wie bei den Systemen gemäß den Figuren 1 und 6 ein Kriterium geschaffen, anhand dessen die Detektion der jeweiligen Lage A bzw. B der Kassette im Gerät erfolgen kann. Der Detektionsvorgang zur Ermittlung der jeweiligen Lage A bzw. B der Kassette kann beim System gemäß Fig.7 in derselben Weise erfolgen, wie dies beim System gemäß Fig.1 detailliert beschrieben ist.

Infolge der vorstehend beschriebenen Zuordnungen zu den Kontakten an der Kassette und den Gegenkontakten im Gerät sind beim Gerät des Systems gemäß Fig.7 die für einen Datentransfer vorgesehenen Gegenkontakte 23 und 24 des Gegenkontaktsatzes 27, deren Zuordnung der Signale D und C beim Einsetzen einer Kassette 3 in das Gerät in der Lage A zu der Zuordnung der Signale D und C zu den mit ihnen in Kontakverbindung tretenden Kontakten 15 und 16 des Kontaktsatzes 13 gleich ist, direkt und die für einen Datentransfer vorgesehenen Gegenkontakte 68 und 69 des anderen Gegenkontaktsatzes 72, deren Zuordnung der Signale D und C beim Einsetzen einer Kassette in das Gerät in der anderen Lage B zu der Zuordnung der Signale D und C zu den mit ihnen in Kontaktverbindung tretenden Kontakten 15 und 16 des Kontaktsatzes 13 ungleich ist, über die Umschalteinrichtung 31 mit den Signalanschlüssen 33 und 34 der Schreib- und Leseeinrichtung 30 verbunden. Die für die Spannungsversorgung vorgesehenen Gegenkontakte 25 und 26 sowie 70 und 71 der beiden Gegenkontaktsätze 27 und 72 sind direkt mit den geräteseitigen Spannungsversorgungsanschlüssen 37 und 38 verbunden, wodurch eine besonders einfache Zufuhr der Versorgungsspannung zu dem Halbleiterspeicher 8 erreicht ist.

Beim Gerät 2 des Systems gemäß Fig.7 ist die Anzeigeeinrichtung 44 als alphanumerische Anzeigeeinrichtung ausgebildet, der zu ihrer Steuerung die von der Datentransfer-Detektorstufe 32 abgegebenen Detektionssignale S1, S2 und S3 zugeführt werden und mit der die detektierte jeweilige Lage A bzw. B der Kassette und das Vorhandensein einer nichtsystemgemäßen Kassette im Gerät beziehungsweise das Fehlen einer Kassette im Gerät in Form von Buchstaben oder Ziffern angezeigt wird.

Bei dem in Fig.8 dargestellten Aufzeichnungs- und Wiedergabesystem 1 handelt es sich um eine Abwandlung des in Fig.7 dargestellten Systems. Während bei dem in Fig.7 dargestellten System beim Einsetzen einer Kassette 3 in das Gerät 2 in der Lage B die Zuordnungen der Signale D und C zu den für einen Datentransfer vorgesehenen Kontakten 15 und 16 und Gegenkontakten 68 und 69 ungleich sind, sind beim System gemäß Fig.8 die Zuordnungen der Potentiale + und - zu den für die Spannungsversorgung vorgesehenen Kontakten 17 und 18 und Gegenkontakten 70 und 71 ungleich. In diesem Fall ist in der Lage B der Kassette aufgrund der bezüglich des Halbleiterspeichers 8 falsch gepolten Versorgungsspannung der Halbleiterspeicher nicht funktionsfähig und daher ist in der Lage B der Kassette nach dem Einsetzen derselben in das Gerät auch kein ordnungsgemäßer Datentransfer zwischen der Schreib- und Leseeinrichtung 30 und dem Halbleiterspeicher 8 möglich, wogegen dies in der Lage A der Kassette 3 wegen der gleichen Zuordnungen der Signale D und C und Potentiale + und - zu den in Kontaktverbindung stehenden Kontakten und Gegenkontakten möglich ist, so daß wiederum ein Kriterium geschaffen ist, anhand dessen die Detektion der jeweiligen Lage A bzw. B der Kassette im Gerät erfolgen kann. Der Detektionsvorgang zum Ermitteln der jeweiligen Lage A bzw. B der Kassette im Gerät kann beim System gemäß Fig.8 in vollkommen gleicher Weise erfolgen, wie dies bei dem System gemäß Fig.1 detailliert beschrieben ist.

Die Erfindung ist nicht auf die vorstehend beschriebenen Ausführungsbeispiele beschränkt. Es können auch mehr als ein Halbleiterspeicher in einer Kassette vorgesehen sein. Anstelle eines nichtflüchtigen Halbleiterspeichers kann auch ein flüchtiger Halbleiterspeicher in einer Kassette vorgesehen sein, wobei dann in der Kassette zusätzlich eine Spannungsversorgungsquelle, beispielsweise eine Batterie, zur Versorgung des flüchtigen Halbleiterspeichers, wenn derselbe von den geräteseitigen Spannungsversorgungsanschlüssen her nicht versorgt wird, vorgesehen ist. Ein Halbleiterspeicher kann nicht nur zweckmäßigerweise als statischer, sondern auch als dynamischer Speicher ausgebildet sein. Es können auch sogenannte Blasenspeicher oder Ladungsverschiebespeicher als Festkörperspeichereinrichtung zur Anwendung kommen. Die Datentransfer-Detektorstufe kann auch auf einer anderen Funktionsweise beruhen und beispielsweise einen ordnungsgemäßen Datentransfer beim Datentransfer-Testbetrieb anhand von speziellen Codesignalen detektieren, die von einer Schreib- und Leseeinrichtung zur Festkörperspeichereinrichtung übertragen und von der Festkörperspeichereinrichtung zu der Schreib- und Leseeinrichtung zurückgesendet werden. Bei den vorstehend beschriebenen Ausführungsbeispielen handelt es sich um Systeme zum Aufzeichnen und Wiedergeben von Informationssignalen. Es können die erfindungsgemäßen Maßnahmen aber auch bei Systemen, die nur zum Aufzeichnen beziehungsweise nur zum Wiedergeben von Informationssignalen vorgesehen sind, zur Anwendung kommen.

## Patentansprüche

1. Aufzeichnungs- und/oder Wiedergabesystem (1), das aus mindestens einem Aufzeichnungs- und/oder Wiedergabegerät (2) und mindestens einer wahlweise in zwei um eine Wendeachse (4) gewendeten Lagen (A,B) in ein Gerät (2) einsetzbaren Kassette (3) besteht, in der ein Aufzeichnungsträger (5) untergebracht ist und die zum Speichern von der Kassette zugeordneten Daten eine elektrisch ansprechbare Festkörperspeichereinrichtung (8) enthält, die mindestens je einer der beiden Lagen der Kassette zuordenbare Speicherbereiche aufweist und die für einen Datentransfer zu und von der Festkörperspeichereinrichtung vorgesehene, eine vorgegebene Zuordnung von Signalen (D,C) aufweisende Signalanschlüsse (9,10) und für die Spannungsversorgung der Festkörperspeichereinrichtung vorgesehene, eine vorgegebene Zuordnung von Potentialen (+,-) aufweisende Versorgungsanschlüsse (11,12) aufweist, von denen die Signalanschlüsse (9,10) der Festkörperspeichereinrichtung mit an der Kassette angebrachten, von außerhalb der Kassette zugänglichen, für einen Datentransfer vorgesehenen Kontakten (15,16,19,20) verbunden sind, die beim Einsetzen einer Kassette in das Gerät mit in dem Gerät untergebrachten, für einen Datentransfer vorgesehenen Gegenkontakten (23,24;68,69) in Kontaktverbindung treten, die mit für einen Datentransfer vorgesehenen, die gleiche Zuordnung von Signalen (D,C) wie die für einen Datentransfer vorgesehenen Signalanschlüsse (9,10) der Festkörperspeichereinrichtung aufweisenden Signalanschlüssen (33,34) einer im Gerät vorgesehenen Schreib- und Leseeinrichtung (30) verbunden sind, die zum Einschreiben und Auslesen von Daten in und aus den den beiden Lagen der Kassette zuordenbaren Speicherbereichen der Festkörperspeichereinrichtung vorgesehen ist, und von denen die Versorgungsanschlüsse (11,12) der Festkörperspeichereinrichtung mit an der Kassette angebrachten, von außerhalb der Kassette zugänglichen, für die Spannungsversorgung vorgesehenen Kontakten (17,18,21,22) verbunden sind, die beim Einsetzen einer Kassette in das Gerät mit in dem Gerät untergebrachten, für die Spannungsversorgung vorgesehenen Gegenkontakten (25,26;70,71) in Kontaktverbindung treten, die mit für die Spannungsversorgung vorgesehenen, die gleiche Zuordnung von Potentialen wie die Versorgungsanschlüsse (11,12) der Festkörperspeichereinrichtung aufweisenden geräteseitigen Spannungsversorgungsanschlüssen (37,38) verbunden sind, und im Gerät eine Detektoreinrichtung (39) zum Ermitteln der jeweiligen Lage der in das Gerät eingesetzten Kassette vorgesehen ist, dadurch gekennzeichnet, daß die Kontakte (15 bis 22) an der Kassette eine Zuordnung der Signale (D,C) und Potentiale (+,-) aufweisen, die beim Einsetzen der Kassette in das Gerät in einer Lage (A) der Kassette gleich und in der anderen Lage (B) der Kassette zumindest bei einem Teil der Kontakte ungleich zu der Zuordnung der Signale (D,C) und Potentiale (+,-) zu den mit den Kontakten (15 bis 22) an der Kassette in Kontaktverbindung tretenden Gegenkontakten (23 bis 26; 68 bis 71) im Gerät ist, daß im Gerät ein Datentransfer-Testbetrieb einschaltbar ist, bei dem ein Datentransfer zwischen der Schreib- und Leseeinrichtung (30) und der Festkörperspeichereinrichtung (8) versucht wird, daß die Detektoreinrichtung (39) zum Ermitteln der jeweiligen Lage der Kassette eine Datentransfer-Detektorstufe (32) aufweist, mit der ein bei gleichen Zuordnungen der Signale (D,C) und Potentiale (+,-) zu den in Kontaktverbindung getretenen Kontakten (15 bis 22) und Gegenkontakten (23 bis 26; 68 bis 71) beim Testbetrieb möglicher ordnungsgemäßer Datentransfer zwischen der Schreib- und Leseeinrichtung (30) und der Festkörperspeichereinrichtung (8) detektierbar ist, und daß die Detektoreinrichtung (39) in Abhängigkeit vom jeweils mit der Datentransfer-Detektorstufe (32) festgestellten Detektionsergebnis beim Testbetrieb eines von zwei je eine der beiden Lagen der Kassette kennzeichnenden Detektionssignalen (S1,S2) abgibt.

2. System nach Anspruch 1, dadurch gekennzeichnet, daß die von der Detektoreinrichtung (39) abgegebenen Detektionssignale (S1,S2) einer Anzeigeeinrichtung (44) zur Anzeige der detektierten jeweiligen Lage der Kassette zuführbar sind.

3. System nach Anspruch 1 oder 2, bei dem eine Kassette (3) in beiden gewendeten Lagen (A,B) im Gerät (2) betreibbar ist, dadurch gekennzeichnet, daß die Gegenkontakte (23,24;23,24,25,26;68,69;70,71), deren Zuordnung beim Einsetzen der Kassette in das Gerät in einer Lage der Kassette ungleich zu der Zuordnung zu den mit diesen Gegenkontakten in Kontaktverbindung tretenden Kontakten (20,19;16,15,18,17;15,16;17,18) an der Kassette ist, über eine Umschalteinrichtung (31) zum Umschalten der Zuordnung zu diesen Gegenkontakten anspeisbar sind, mit der bei ungleichen Zuordnungen zu diesen Gegenkontakten und zu den mit diesen in Kontaktverbindung getretenen Kontakten nach dem Einsetzen der Kassette in das Gerät die Verbindungen zu diesen Gegenkontakten zur Erzielung von gleichen Zuordnungen zu diesen Gegenkontakten und zu den mit diesen in Kontaktverbindung getretenen Kontakten umschaltbar sind.

4. System nach Anspruch 3, dadurch gekennzeichnet, daß die Umschalteinrichtung (31) elektrisch steuerbar ist und von der Datentransfer-Detektorstufe (32) her in Abhängigkeit vom jeweils festgestellten Detektionsergebnis beim Testbetrieb gesteuert wird.

5. System nach einem der vorhergehenden Ansprüche, dadurch gekennzeichnet, daß an der Kassette zwei bezüglich der Wendeachse der Kassette spiegelbildlich angeordnete Kontaktsätze (13,14) vorgesehen sind, deren Kontakte (15 bis 22) je mit den Anschlüssen (9,10,11,12) der Festkörperspeichereinrichtung (8) verbunden sind und von denen beim Einsetzen der Kassette in das Gerät die Kontakte (15,16,17,18) eines Kontaktsatzes (13) in einer Lage (A) der Kassette und die Kontakte (19,20,21,22) des anderen Kontaktsatzes (14) in der anderen Lage (B) der Kassette mit den Gegenkontakten (23,24,25,26) eines einzigen gegenüber der Wendeachse (4) der Kassette versetzt angeordneten Gegenkontaktsatzes (27) im Gerät (2) in Kontaktverbindung treten, und daß die Zuordnungen der Signale (D,C) zu den für einen Datentransfer vorgesehenen Kontakten (15,16,20,19) der beiden Kontaktsätze (13,14) bezüglich der Wendeachse der Kassette spiegelbildlich ungleich sind und die Zuordnungen der Potentiale (+,-) zu den für die Spannungsversorgung vorgesehenen Kontakten (17,18,21,22) der beiden Kontaktsätze bezüglich der Wendeachse der Kassette spiegelbildlich gleich sind und daß die für einen Datentransfer vorgesehenen Gegenkontakte (23,24) des Gegenkontaktsatzes (27) über eine Umschalteinrichtung (31) mit den für einen Datentransfer vorgesehenen Signalanschlüssen (33,34) der Schreib- und Leseeinrichtung (30) und die für die Spannungsversorgung vorgesehenen Gegenkontakte (25,26) des Gegenkontaktsatzes (27) direkt mit den geräteseitigen Spannungsversorgungsanschlüssen (37,38) verbunden sind.

6. System nach einem der Ansprüche 1 bis 4, dadurch gekennzeichnet, daß an der Kassette ein einziger Kontaktsatz (13) vorgesehen ist, dessen Kontakte (15 bis 18) mit den Anschlüssen (9 bis 12) der Festkörperspeichereinrichtung (8) verbunden sind und dessen für einen Datentransfer vorgesehene Kontakte (15,16) und dessen für die Spannungsversorgung vorgesehene Kontakte (17,18) je bezüglich der Wendeachse (4) der Kassette (3) spiegelbildlich angeordnet sind und dessen Kontakte (15 bis 18) beim Einsetzen der Kassette in das Gerät in beiden Lagen (A,B) der Kassette mit den Gegenkontakten (23 bis 26) eines einzigen Gegenkontaktsatzes (27) im Gerät in Kontaktverbindung treten, und daß sowohl die für einen Datentransfer vorgesehenen Gegenkontakte (23,24) des Gegenkontaktsatzes (27) als auch die für die Spannungsversorgung vorgesehenen Gegenkontakte (25,26) des Gegenkontaktsatzes (27) über eine Umschalteinrichtung (31) mit den für einen Datentransfer vorgesehenen Signalanschlüssen (33,34) der Schreib- und Leseeinrichtung (30) und mit den geräteseitigen Spannungsversorgungsanschlüssen (37,38) verbunden sind.

7. System nach Anspruch 6, dadurch gekennzeichnet, daß zwischen mindestens einen Versorgungsanschluß (11) der Festkörperspeichereinrichtung (8) und dem mit diesem verbundenen Kontakt (17) des Kontaktsatzes (13) an der Kassette eine Diode (63) als Verpolungsschutz eingeschaltet ist.

8. System nach einem der Ansprüche 1 bis 4, dadurch gekennzeichnet, daß an der Kassette (3) ein einziger Kontaktsatz (13) vorgesehen ist, dessen Kontakte (15 bis 18) mit den Anschlüssen (9 bis 12) der Festkörperspeichereinrichtung (8) verbunden sind und der gegenüber der Wendeachse (4) der Kassette versetzt angeordnet ist und dessen Kontakte (15 bis 18) beim Einsetzen der Kassette in das Gerät je nach der Lage der Kassette mit den Gegenkontakten (23 bis 26, 68 bis 71) eines von zwei bezüglich der Wendeachse der Kassette speigelbildlich angeordneten Gegenkontaktsätzen (27,28) im Gerät in Kontaktverbindung treten, und daß die für einen Datentransfer vorgesehenen Gegenkontakte (23,24) eines Gegenkontaktsatzes (27), deren Zuordnung der Signale (D,C) beim Einsetzen einer Kassette in das Gerät in einer Lage (A) zu der Zuordnung der Signale (D,C) zu den mit ihnen in Kontaktverbindung tretenden Kontakten (15,16) gleich ist, direkt und die für einen Datentransfer vorgesehenen Gegenkontakte (68,69) des anderen Gegenkontaktsatzes (72), deren Zuordnung der Signale (D,C) beim Einsetzen einer Kassette in das Gerät in der anderen Lage (B) zu der Zuordnung der Signale (D,C) zu den mit ihnen in Kontaktverbindung tretenden Kontakten (15,16) ungleich ist, über eine Umschalteinrichtung (31) mit den Signalanschlüssen (33,34) der Schreib- und Leseeinrichtung (30) verbunden sind und die für die Spannungsversorgung vorgesehenen Gegenkontakte (17,18,70,71) der beiden Gegenkontaktsätze (27,72) direkt mit den geräteseitigen Spannungsversorgungsanschlüssen (37,38) verbunden sind.

9. System nach einem der vorhergehenden Ansprüche, dadurch gekennzeichnet, daß die Festkörperspeichereinrichtung (8) durch einen einzigen Halbleiterspeicher für serielles Einschreiben und Auslesen von Datensignalen gebildet ist, der zwei für einen Datentransfer vorgesehene Signalanschlüsse (9,10), die durch einen Signalanschluß (9) für serielle Datensignale (D) und einen Signalanschluß (10) für ein Taktsignal (C) gebildet sind, und zwei für die Spannungsversorgung vorgesehene Versorgungsanschlüsse (11,12) aufweist, und daß an der Kassette (3) mindestens ein Kontaktsatz (13,14) mit vier mit den vier Anschlüssen (9 bis 12) des Halbleiterspeichers verbundenen Kontakten (15 bis 22) vorgesehen ist, dessen vier Kontakte (15,16,17,18;19,20,21,22) beim Einsetzen einer Kassette in das Gerät mit vier Gegenkontakten (23,24,25,26;68,69,70,71) eines im Gerät vorgesehenen Gegenkontaktsatzes (27,72) in Kontaktverbindung treten.

10. Kassette für ein System nach Anspruch 5, die wahlweise in zwei um eine Wendeachse (4) gewendeten Lagen (A,B) in ein Gerät (2) einsetzbar ist und in der ein Aufzeichnungsträger (5) untergebracht ist und die zum Speichern von der Kassette (3) zugeordneten Daten eine elektrisch ansprechbare Festkörperspeichereinrichtung (8) enthält, die mindestens je einer der beiden Lagen (A,B) der Kassette zuordenbare Speicherbereiche aufweist und die für einen Datentransfer zu und von der Festkörperspeichereinrichtung (8) vorgesehene, eine vorgegebene Zuordnung von Signalen (D,C) aufweisende Signalanschlüsse (9,10) und für die Spannungsversorgung der Festkörperspeichereinrichtung vorgesehene, eine vorgegebene Zuordnung von Potentialen (+,-) aufweisende Versorgungsanschlüsse (11,12) aufweist, von denen die Signalanschlüsse (9,10) der Festkörperspeichereinrichtung mit an der Kassette angebrachten, von außerhalb der Kassette zugänglichen, für einen Datentransfer vorgesehenen Kontakten (15,16,19,20) verbunden sind, und von denen die Versorgungsanschlüsse (11,12) der Festkörperspeichereinrichtung mit an der Kassette angebrachten, von außerhalb der Kassette zugänglichen, für die Spannungsversorgung vorgesehenen Kontakten (17,18,21,22) verbunden sind, dadurch gekennzeichnet, daß an der Kassette zwei bezüglich der Wendeachse der Kassette spiegelbildlich angeordnete Kontaktsätze (13,14) vorgesehen sind, deren Kontakte (15 bis 22) je mit den Anschlüssen (9,10,11,12) der Festkörperspeichereinrichtung (8) verbunden sind, und daß die Zuordnungen der Signale (D,C) zu den für einen Datentransfer vorgesehenen Kontakten (15,16,20,19) der beiden Kontaktsätze (13,14) bezüglich der Wendeachse (4) der Kassette spiegelbildlich ungleich sind und die Zuordnungen der Potentiale (+,-) zu den für die Spannungsversorgung vorgesehenen Kontakten (17,19,21,22) der beiden Kontaktsätze bezüglich der Wendeachse der Kassette spiegelbildlich gleich sind.

11. Kassette für ein System nach Anspruch 6, die wahlweise in zwei um eine Wendeachse (4) gewendeten Lagen (A,B) in ein Gerät (2) einsetzbar ist und in der ein Aufzeichnungsträger (5) untergebracht ist und die zum Speichern von der Kassette (3) zugeordneten Daten eine elektrisch ansprechbare Festkörperspeichereinrichtung (8) enthält, die mindestens je einer der beiden Lagen (A,B) der Kassette zuordenbare Speicherbereiche aufweist und die für einen Datentransfer zu und von der Festkörperspeichereinrichtung (8) vorgesehene, eine vorgegebene Zuordnung von Signalen (D,L) aufweisende, Signalanschlüsse (9,10) und für die Spannungsversorgung der Festkörperspeichereinrichtung vorgesehene, eine vorgegebene Zuordnung von Potentialen (+,-) aufweisende Versorgungsanschlüsse (11,12) aufweist, von denen die Signalanschlüsse (9,10) der Festkörperspeichereinrichtung mit an der Kassette angebrachten, von ausserhalb der Kassette zugänglichen, für einen Datentransfer vorgesehenen Kontakten (15,16,19,20) verbunden sind, und von denen die Versorgungsanschlüsse (11,12) der Festkörperspeichereinrichtung mit an der Kassette angebrachten, von ausserhalb der Kassette zugänglichen, für die Spannungsversorgung vorgesehenen Kontakten (17,18, 21,22) verbunden sind, dadurch gekennzeichnet, dass an der Kassette (3) ein einziger Kontaktsatz (13) vorgesehen ist, dessen Kontakte mit den Anschlüssen (9 bis 12) der Festkörperspeichereinrichtung (8) verbunden sind und dessen für einen Datentransfer vorgesehene Kontakte (15,16) und dessen für die Spannungsversorgung vorgeshene Kontakte (17,18) je bezüglich der Wendeachse (4) der Kassette (3) spiegelbildlich angeordnet sind.

12. Kassette nach Anspruch 11, dadurch gekennzeichnet, daß zwischen mindestens einen Versorgungsanschluß (11) der Festkörperspeichereinrichtung (8) und dem mit diesem verbundenen Kontakt (17) des Kontaktsatzes (13) an der Kassette eine Diode (63) als Verpolungsschutz eingeschaltet ist.

13. Kassette nach einem der Ansprüche 10 bis 12, dadurch gekennzeichnet, daß die Festkörperspeichereinrichtung (8) durch einen einzigen Halbleiterspeicher für serielles Einschreiben und Auslesen von Datensignalen gebildet ist, der zwei für einen Datentransfer vorgesehene Signalanschlüsse (9,10), die durch einen Signalanschluß (9) für serielle Datensignale (D) und einen Signalanschluß (10) für ein Taktsignal (C) gebildet sind, und zwei für die Spannungsversorgung vorgesehene Versorgungsanschlüsse (11,12) aufweist, und daß an der Kassette mindestens ein Kontaktsatz (13,14) mit vier mit den vier Anschlüssen (9 bis 12) des Halbleiterspeichers verbundenen Kontakten (15 bis 22) vorgesehen ist.

14. Aufzeichnungs- und/oder Wiedergabegerät für ein system nach einem der Ansprüche 1 bis 9, zum Zusammenwirken mit mindestens einer wahlweise in zwei um eine Wendeachse gewendeten Lagen (A,B) in das Gerät einsetzbaren Kassette (3), in der ein Aufzeichnungsträger (5) untergebracht ist und die zum Speichern von der Kassette zugeordneten Daten eine elektrisch ansprechbare Festkörperspeichereinrichtung (8) enthält, die mindestens je einer der beiden Lagen der Kassette zuordenbare Speicherbereiche, für einen Datentransfer zu und von der Festkörperspeichereinrichtung Kontakte (15,16,19,20) und für die Spannungsversorgung der Festkörperspeichereinrichtung Kontakte (17,18,21,22) aufweist, wobei das Gerät versehenen ist mit Gegenkontakten (23 bis 26;68 bis 71) zum Inkontaktverbindung bringen mit den Kontakten der Kassette beim Einsetzen der Kassette in das Gerät, mit einer Schreib- und Leseeinrichtung (30) zum Einschreiben und Auslesen von Daten in und aus den den beiden Lagen der Kassette zuordenbaren Speicherbereichen der Festkörperspeichereinrichtung und mit einer Detektoreinrichtung (39) zum Ermitteln der jeweiligen Lage der in das Gerät eingesetzten Kassette, dadurch gekennzeichnet, daß im Gerät ein Datentransfer-Testbetrieb einschaltbar ist, zum versuchen eines Datentransfers zwischen der Schreib- und Leseeinrichtung (30) und der Festkörperspeichereinrichtung (8), daß die Detektoreinrichtung (39) zum Ermitteln der jeweiligen Lage der Kassette eine Datentransfer-Detektorstufe (32) aufweist, mit der ein bei gleichen Zuordnungen der Signale (D,C) und Potentiale (+,-) zu den in Kontaktverbindung getretenen Kontakten und Gegenkontakten beim Testbetrieb möglicher ordnungsgemäßer Datentransfer zwischen der Schreib- und Leseeinrichtung (30) und der Festkörperspeichereinrichtung (8) detektierbar ist, und daß die Detektoreinrichtung (39) in Abhängigkeit vom jeweils mit der Datentransfer-Detektorstufe (32) festgestellten Detektionsergebnis beim Testbetrieb eines von zwei je eine der beiden Lagen der Kassette kennzeichnenden Detektionssignalen (S1,S2) abgibt.

15. Aufzeichnungs- und/oder Wiedergabegerät nach Anspruch 14, dadurch gekennzeichnet, daß die von der Detektoreinrichtung (39) abgegebenen Detektionssignale (S1,S2) einer Anzeigeeinrichtung (44) zur Anzeige der detektierten jeweiligen Lage der Kassette zuführbar sind.

16. Aufzeichnungs- und/oder Wiedergabegerät nach Anspruch 14 oder 15, zum Betreiben einer Kassette in beiden gewendeten Lagen, dadurch gekennzeichnet, daß die Gegenkontakte (23,24;23,24,25,26;68,69;70,71) über eine Umschalteinrichtung (31) zum Umschalten der Zuordnung zu diesen Gegenkontakten anspeisbar sind.

17. Aufzeichnungs- und/oder Wiedergabegerät nach Anspruch 16, dadurch gekennzeichnet, daß die Umschalteinrichtung (31) elektrisch steuerbar ist und von der Datentransfer-Detektorstufe (32) her in Abhängigkeit vom jeweils festgestellten Detektionsergebnis beim Testbetrieb gesteuert wird.

18. Aufzeichnungs- und/oder Wiedergabegerät nach einem der Ansprüche 14 bis 17, zum Zusammenwirken mit einer Kassette die versehen ist mit zwei bezüglich der Wendeachse der Kassette spiegelbildlich angeordneten Kontaktsätzen (13,14), deren Kontakte (15 bis 22) je mit den Anschlüssen (9 bis 12) der Festkörperspeichereinrichtung (8) verbunden sind und von denen beim Einsetzen der Kassette in das Gerät die Kontakte (15 bis 18) eines Kontaktsatzes (13) in einer Lage (A) des Kassette und die Kontakte (19 bis 22) des anderen Kontaktsatzes (14) in der anderen Lage (B) der Kassette mit den Gegenkontakten (23 bis 26) eines Gegenkontaktsatzes (27) im Gerät in Kontaktverbindung treten, dadurch gekennzeichnet dass der Gegenkontaktsatz gegenüber der Wendeachse der Kassette versetzt im Gerät angeordnet ist, daß die für einen Datentransfer vorgesehenen Gegenkontakte (23,24) des Gegenkontaktsatzes (27) über eine Umschalteinrichtung (31) mit den für einen Datentransfer vorgesehenen Signalanschlüssen (33,34) der Schreib- und Leseeinrichtung (30) und die für die Spannungsversorgung vorgesehenen Gegenkontakte (25,26) des Gegenkontaktsatzes (27) direkt mit den geräteseitigen Spannungsversorgungsanschlüssen (37,38) verbunden sind.

19. Aufzeichnungs- und/oder Wiedergabegerät nach einem der Ansprüche 14 bis 17, zum Zusammenwirken mit einer Kassette die mit einem einzigen Kontaktsatz (13) versehen ist, dessen Kontakte (15 bis 18) mit den Anschlüssen (9 bis 12) der Festkörperspeichereinrichtung (8) verbunden sind und dessen für einen Datentransfer vorgesehene Kontakte (15,16) und dessen für die Spannungsversorgung vorgesehene Kontakte (17,18) je bezüglich der Wendeachse (4) der Kassette (3) spiegelbildlich angeordnet sind und dessen Kontakte (15 bis 18) beim Einsetzen der Kassette in das Gerät in beiden Lagen (A,B) der Kassette mit den Gegenkontakten (23 bis 26) eines einzigen Gegenkontaktsatzes im Gerät in Kontaktverbindung treten, dadurch gekennzeichnet daß sowohl die für einen Datentransfer vorgesehenen Gegenkontakte (23,24) des Gegenkontaktsatzes (27) als auch die für die Spannungsversorgung vorgesehenen Gegenkontakte (25,26) des Gegenkontaktsatzes über eine Umschalteinrichtung (31) mit den für einen Datentransfer vorgesehenen Signalanschlüssen (33,34) der Schreib- und Leseeinrichtung (30) und mit den geräteseitigen Spannungsversorgungsanschlüssen (37,38) verbunden sind.

20. Aufzeichnungs- und/oder Wiedergabegerät nach einem der Ansprüche 14 bis 17, zum Zusammenwirken mit einer Kassette die mit einem einzigen Kontaktsatz (13) versehen ist, dessen Kontakte (15 bis 18) mit den Anschlüssen (9 bis 12) der Festkörperspeichereinrichtung (8) verbunden sind und der gegenüber der Wendeachse (4) der Kassette versetzt angeordnet ist und dessen Kontakte (15 bis 18) beim Einsetzen der Kassette in das Gerät je nach der Lage der Kassette mit den Gegenkontakten (23 bis 26,68 bis 71) eines von zwei bezüglich der Wendeachse der Kassette spiegelbildlich angeordneten Gegenkontaktsätzen (27,28) im Gerät in Kontaktverbindung treten, dadurch gekennzeichnet daß die für einen Datentransfer vorgesehenen Gegenkontakte (23,24) eines Gegenkontaktsatzes (27), deren Zuordnung der Signale (D,C) beim Einsetzen einer Kassette in das Gerät in einer Lage (A) zu der Zuordnung der Signale (D,C) zu den mit ihnen in Kontaktverbindung tretenden Kontakten (15,16) gleich ist, direkt und die für einen Datentransfer vorgesehenen Gegenkontakte (68,69) des anderen Gegenkontaktsatzes (72), deren Zuordnung der Signale (D,C) beim Einsetzen einer Kassette in das Gerät in der anderen Lage (B) zu der Zuordnung der Signale (D,C) zu den mit ihnen in Kontaktverbindung tretenden Kontakten (15,16) ungleich ist, über eine Umschalteinrichtung (31) mit den Signalanschlüssen (33,34) der Schreib- und Leseeinrichtung (30) verbunden sind und die für die Spannungsversorgung vorgesehenen Gegenkontakte (17,18,70,71) der beiden Gegenkontaktsätze (27,72) direkt mit den geräteseitigen Spannungsversorgungsanschlüssen (37,38) verbunden sind.

## Claims

1. A recording and/or reproducing system (1), comprising at least one recording and/or reproducing apparatus (2) and at least one cassette (3) which can be loaded selectively into an apparatus (2) in two positions (A, B) which are inverted relative to an axis of reversal (4), which cassette accommodates a record carrier (5) and, for the storage of data associated with the cassette, an electrically operable solid-state memory device (8), which device has at least one storage section for each of the two positions of the cassette and which, for a data transfer to and from the solid-state memory device, comprises signal terminals (9, 10) with a given assignment of signals (D, C) and, for the power supply to the solid-state memory device, power-supply terminals (11, 12) with a given assignment of potentials (+, -), the signal terminals (9, 10) of the solid-state memory device being connected to data-transfer contacts (15, 16, 19, 20) on the cassette, which are accessible from the exterior of the cassette, and which when a cassette is loaded into the apparatus mate with data-transfer complementary contacts (23, 24; 68, 69) in the apparatus, which are connected to data-transfer signal terminals (33, 34) of a read-in/read-out device (30) in the apparatus, the assignment of signals (D, C) to the signal terminals (33, 34) being the same as for the data-transfer signal terminals (9, 10) of the solid-state memory device, which read-in/read-out device serves for reading data into and out of the storage sections of the solid-state memory device assignable to the two positions of the cassette, and the power-supply terminals (11, 12) of the solid-state memory device being connected to power-supply contacts (17, 18, 21, 22) on the cassette which are accessible from the exterior of the cassette and, when a cassette is loaded into the apparatus mate with power-supply complementary contacts (25, 26; 70, 71) in the apparatus which are connected to power-supply terminals (37, 38) of the apparatus, the assignment of potentials to said power-supply terminals being the same as for the power-supply terminals (11, 12) of the solid-state memory device, the apparatus comprising a detector device (39) for detecting the instantaneous position of the cassette loaded into the apparatus, characterized in that the assignment of signals (D, C) and potentials (+, -) to the contacts (15 to 22) on the cassette concurs when the cassette is loaded into the apparatus in one position (A) of the cassette and does not concur in the other position (B) of the cassette, at least for some of the contacts, with the assignment of signals (D, C) and potentials (+, -) to the complementary contacts (23 to 26; 68 to 71) in the apparatus which mate with the contacts (15 to 22) on the cassette, in that the apparatus can be set to a data-transfer test mode in which a data transfer between the read-in/read-out device (30) and the solid-state memory device (8) is attempted, in that for detecting the instantaneous position of the cassette the detector device (39) comprises a data-transfer detector stage (32) to detect a correct data transfer between the read-in/read-out device (30) and the solid-state memory device (8), which data-transfer is possible in the test mode when the assignments of signals (D, C) and potentials (+, -) to the mating contacts (15 to 20) and complementary contacts (23 to 26; 68 to 71) concurs, and in that depending on the detection result obtained by means of the data-transfer detector stage (32) in the test mode the detector device (39) supplies one of two detection signals (S1, S2) which each characterize one of the two positions of the cassette.

2. A system as claimed in Claim 1, characterized in that the detection signals (S1, S2) supplied by the detector device (39) can be applied to an indicator device (44) for indicating the detected instantaneous position of the cassette.

3. A system as claimed in Claim 1 or 2, in which a cassette (3) is operable in each of two mutually inverted positions (A, B), characterized in that the complementary contacts (23, 24; 23, 24, 25, 26; 68, 69; 70, 71), whose assignment does not concur with the assignment to the contacts (20, 19; 15, 18, 17; 15, 16; 17, 18) on the cassette which mate with said complementary contacts when the cassette is loaded into the apparatus in one position of the cassette, can be driven *via* a switching device (31) for changing the complementary-contact assignment, which device in the case that the assignment to said complementary contacts and the assignment to the contacts mating therewith do not concur after loading of the cassette into the apparatus enables the connections to said complementary contacts to be changed in such a way that the assignments to said complementary contacts and to the contacts mating therewith concur.

4. A system as claimed in Claim 3, characterized in that the switching device (31) is electrically controllable and is controlled by the data-transfer detector stage (32) depending on the instantaneous detection result obtained in the test mode.

5. A system as claimed in any one of the preceding Claims, characterized in that the cassette comprises two contact sets (13, 14) which are arranged in a mirror-inverted configuration relative to the axis of reversal of the cassette and whose contacts (15 to 22) are connected to the terminals (9, 10, 11, 12) of the solid-state memory device (8), the contacts of one contact set, when the cassette is loaded into the apparatus in one position (A), mating with a single set (27) of complementary contacts in the apparatus (2) which are arranged to be offset relative to the axis (4) of reversal of the cassette, and the contacts (19, 20, 21, 22) of the other contact set (14) mating with said complementary contacts (23, 24, 25, 26) in the other position (B) of the cassette, in that the assignments of the signals (D, C) to the data-transfer contacts (15, 16, 20, 19) of both contact sets (13, 14) are not mutually mirror-inverted relative to the axis of reversal of the cassette and the assignments of the potentials (+, -) to the power-supply contacts (17, 18, 21, 22) of both contact sets are mutually mirror-inverted relative to the axis of reversal of the cassette, and in that the data-transfer complementary contacts (23, 24) of the complementary-contact set (27) are connected to the data-transfer signal terminals (33, 34) of the read-in/read-out device (30) *via* a switching device (31) and the power-supply complementary contacts (25, 26) of the complementary-contact set (27) are connected directly to the power-supply terminals (37, 38) on the apparatus.

6. A system as claimed in any one of the Claims 1 to 4, characterized in that the cassette comprises a single contact set (13) whose contacts (15 to 18) are connected to the terminals (9 to 12) of the solid-state memory device (8), the data-transfer contacts (15, 16) and the power-supply contacts (17, 18) of this contact set being each in a mirror-inverted arrangement relative to the axis (4) of reversal of the cassette (3) and the contacts (15 to 18) of this set mating with the complementary contacts (23 to 26) of a single complementary-contact set (27) in the apparatus when the cassette is loaded into the apparatus in both positions (A, B) of the cassette, and in that both the data-transfer complementary contacts (23, 24) of the complementary-contact set (27) and the power supply complementary contacts (25, 26) of the complementary contact set (27) are connected to the data-transfer signal terminals (33, 34) of the read-in/read-out device (30) and to the power-supply terminals (37, 38) of the apparatus *via* a switching device (31).

7. A system as claimed in Claim 6, characterized in that a diode (63) is arranged between at least one power-supply terminal (11) of the solid-state memory device (8) and the contact (17) of contact set (13) on the cassette connected to this terminal to provide protection against polarity reversal.

8. A system as claimed in any one of the Claims 1 to 4, characterized in that the cassette (3) comprises a single contact set (13) having its contacts (15 to 18) connected to the terminals (9 to 12) of the solid-state memory device (8) and arranged to be offset relative to the axis (4) of reversal of the cassette, which contacts (15 to 18) mate with the complementary contacts (23 to 26, 68 to 71) of one of two complementary-contact sets (27, 28) of the apparatus when the cassette is loaded into the apparatus depending on the position of the cassette, which complementary-contact sets are arranged in a mirror-inverted configuration relative to the axis of reversal of the cassette, and in that the data-transfer complementary contacts (23, 24) of one complementary-contact set (27), whose signal assignment (D, C) concurs with the signal assignment (D, C) to the mating contacts (15, 16) when a cassette is loaded into the apparatus in one position, are connected directly to the signal terminals (33, 34) of the read-in/read-out device (30), and the data-transfer complementary contacts (68, 69) of the other complementary-contact set (72), whose signal assignment (D, C) does not concur with the signal assignment (D, C) to the mating contacts (15, 16) when a cassette is loaded into the apparatus in the other position (B), are connected to the signal terminals (33, 34) of said read-in/read-out device (30) *via* a switching device (31), the power-supply complementary contacts (17, 18, 70, 71) of the two complementary-contact sets (27, 72) being connected directly to the power-supply terminals (37, 38) on the apparatus.

9. A system as claimed in any one of the preceding Claims, characterized in that the solid-state memory device (8) is constituted by a single semiconductor memory for serial read-in and read-out of data signals, having two data-transfer signal terminals (9, 10) formed by one signal terminal (9) for serial data signals (D) and one signal terminal (10) for a clock signal (C), and having two power-supply terminals (11, 12), and in that the cassette (3) comprises at least one contact set (13, 14) having four contacts (15 to 22) connected to the four terminals (9 to 12) of the semiconductor memory, which four contacts (15, 16, 17, 18; 19, 20, 21, 22) mate with four complementary contacts (23, 24, 25, 26; 68, 69, 70, 71) of one complementary-contact set (27, 72) in the apparatus when a cassette is loaded into the apparatus.

10. A cassette for a system as claimed in Claim 5, which can be loaded selectively into an apparatus (2) in two positions (A, B) which are inverted relative to an axis (4) of reversal, which accommodates a record carrier (5), and which for storing data associated with the cassette (3) comprises an electrically operable solid-state memory device (8) having at least one storage section for each of the two positions (A, B) of the cassette, and which comprises signal terminals (9, 10) having a given signal assignment (D, C) for a data transfer to and from the solid-state memory device (8) and power-supply terminals (11, 12) having a specific potential assignment (+, -) for the power supply of the solid-state memory device, the signal terminals (9, 10) of the solid-state memory device being connected to data-transfer contacts (15, 16, 19, 20) provided on the cassette and accessible from the exterior of the cassette and the power-supply terminals (11, 12) of the solid-state memory device being connected to power-supply contacts (17, 18, 21, 22) provided on the cassette and accessible from the exterior of the cassette, characterized in that the cassette comprises two contact sets (13, 14) which are arranged in a mirror-inverted configuration relative to the axis of reversal of the cassette and whose contacts (15 to 22) are connected to the respective terminals (9, 10, 11, 12) of the solid-state memory device (8), and in that the assignments of the signals (D, C) to the data-transfer contacts (15, 16, 20, 19) of both contact sets (13, 14) are not mutually mirror-inverted relative to the axis (4) of reversal of the cassette and the assignments of the potentials (+, -) to the power-supply contacts (17, 19, 21, 22) of both contact sets are mutually mirror-inverted relative to the axis of reversal of the cassette.

11. A cassette for a system as claimed in Claim 6, which can be loaded selectively into an apparatus (2) in two positions (A, B) which are inverted relative to an axis (4) of reversal, which accommodates a record carrier (5), and which for storing data associated with the cassette (3) comprises an electrically operable solid-state memory device (8) having at least one storage section for each of the two positions (A, B) of the cassette, and which comprises signal terminals (9, 10) having a given signal assignment (D, L) for a data transfer to and from the solid-state memory device (8) and power-supply terminals (11, 12) having a specific potential assignment (+, -) for the power supply of the solid-state memory device, the signal terminals (9, 10) of the solid-state memory device being connected to data-transfer contacts (15, 16, 19, 20) provided on the cassette and accessible from the exterior of the cassette, and the power-supply terminals (11, 12) of the solid-state memory device being connected to power-supply contacts (17, 18, 21, 22) provided on the cassette and accessible from the exterior of the cassette, characterized in that the cassette (3) comprises a single set (13) of contacts connected to the terminals (9 to 12) of the solid-state memory device (8), of which data-transfer contacts (15, 16) and power-supply contacts (17, 18) are both arranged in a mirror-inverted configuration relative to the axis (4) of reversal of the cassette (3).

12. A cassette as claimed in Claim 11, characterized in that a diode (63) is arranged between at least one power-supply terminal (11) of the solid-state memory device (8) and the contact (17) of the contact set (13) on the cassette connected to this terminal to provide protection against polarity reversal.

13. A cassette as claimed in any one of the Claims 10 to 12, characterized in that the solid-state memory device (8) is constituted by a single semiconductor memory for serial read-in and read-out of data signals, formed by one signal terminal (9) for serial data signals (D) and one signal terminal (10) for a clock signal (C), and having two power-supply terminals (11, 12), and in that the cassette comprises at least one contact set (13, 14) having four contacts (15 to 22) connected to the four terminals (9 to 12) of the semiconductor memory.

14. A recording and/or reproducing apparatus for a system as claimed in any one of the Claims 1 to 9, for cooperation with at least one cassette (3) which can be loaded selectively into the apparatus in two positions (A, B) which are inverted relative to an axis of reversal, which cassette accommodates a record carrier (5) and, for the storage of data associated with the cassette, an electrically operable solid-state memory device (8), which device has at least one storage section for each of the two positions of the cassette, and which comprises contacts (15, 16, 19, 20) for a data transfer to and from the solid-state memory device, and contacts (17, 18, 21, 22) for the power supply to the solid-state memory device-supply terminals (11, 12), the apparatus having complementary contacts (23 to 26; 68 to 71) adapted to mate with the contacts of the cassette when the cassette is loaded into the apparatus, having a read-in/read-out device (30) for reading data into and out of the storage sections of the solid-state memory device assignable to the two positions of the cassette, and having a detector device (39) for detecting the instantaneous position of the cassette loaded into the apparatus, characterized in that the apparatus can be set to a data-transfer test mode to attempt a data transfer between the read-in/read-out device (30) and the solid-state memory device (8), in that for detecting the instantaneous position of the cassette the detector device (39) comprises a data-transfer detector stage (32) to detect a correct data transfer between the read-in/read-out device (30) and the solid-state memory device (8), which data-transfer is possible in the test mode when the assignments of signals (D, C) and potentials (+, -) to the mating contacts and complementary contacts concurs, and in that depending on the detection result obtained by means of the data-transfer detector stage (32) in the test mode the detector device (39) supplies one of two detection signals (S1, S2) which each characterize one of the two positions of the cassette.

15. A recording and/or reproducing apparatus as claimed in Claim 14, characterized in that the detection signals (S1, S2) supplied by the detector device (39) can be applied to an indicator device (44) for indicating the detected instantaneous position of the cassette.

16. A recording and/or reproducing apparatus as claimed in Claim 14 or 15, for operating a cassette in two mutually inverted positions, characterized in that the complementary contacts (23, 24; 23, 24, 25, 26; 68, 69; 70, 71) can be driven *via* a switching device (31) for changing the assignment to these complementary-contacts.

17. A recording and/or reproducing apparatus as claimed in Claim 16, characterized in that the switching device (31) is electrically controllable and is controlled by the data-transfer detector stage (32) depending on the instantaneous detection result obtained in the test mode.

18. A recording and/or reproducing apparatus as claimed in any one of the Claims 14 to 17, for cooperation with a cassette comprising two contact sets (13, 14) which are arranged in a mirror-inverted configuration relative to the axis of reversal of the cassette and whose contacts (15 to 22) are connected to the terminals (9 to 12) of the solid-state memory device (8), the contacts (15 to 18) of one contact set (13), when the cassette is loaded into the apparatus in one position (A), mating with a set (27) of complementary contacts in the apparatus (2), and the contacts (19 to 22) of the other contact set (14) mating with said complementary contacts (23 to 26) in the other position (B) of the cassette, characterised in that set of complementary contacts is arranged in the apparatus so as to be offset relative to the axis of reversal of the cassette, and in that the data-transfer complementary contacts (23, 24) of the complementary-contact set (27) are connected to the data-transfer signal terminals (33, 34) of the read-in/read-out device (30) *via* a switching device (31) and the power-supply complementary contacts (25, 26) of the complementary-contact set (27) are connected directly to the power-supply terminals (37, 38) on the apparatus.

19. A recording and/or reproducing apparatus as claimed in any one of the Claims 14 to 17, for cooperation with a cassette comprising a single contact set (13) whose contacts (15 to 18) are connected to the terminals (9 to 12) of the solid-state memory device (8), the data-transfer contacts (15, 16) and the power-supply contacts (17, 18) of this contact set being each in a mirror-inverted arrangement relative to the axis (4) of reversal of the cassette (3) and the contacts (15 to 18) of this set mating with the complementary contacts (23 to 26) of a single complementary-contact set (27) in the apparatus when the cassette is loaded into the apparatus in both positions (A, B) of the cassette, characterised in that both the data-transfer complementary contacts (23, 24) of the complementary-contact set (27) and the power supply complementary contacts (25, 26) of the complementary contact set are connected to the data-transfer signal terminals (33, 34) of the read-in/read-out device (30) and to the power-supply terminals (37, 38) of the apparatus *via* a switching device (31).

20. A recording and/or reproducing apparatus as claimed in any one of the Claims 14 to 17, for cooperation with a cassette comprising a single contact set (13) having its contacts (15 to 18) connected to the terminals (9 to 12) of the solid-state memory device (8) and arranged to be offset relative to the axis (4) of reversal of the cassette, which contacts (15 to 18) mate with the complementary contacts (23 to 26, 68 to 71) of one of two complementary-contact sets (27, 28) of the apparatus when the cassette is loaded into the apparatus depending on the position of the cassette, characterised in that the complementary-contact sets are arranged in a mirror-inverted configuration relative to the axis of reversal of the cassette, and in that the data-transfer complementary contacts (23, 24) of one complementary-contact set (27), whose signal assignment (D, C) concurs with the signal assignment (D, C) to the mating contacts (15, 16) when a cassette is loaded into the apparatus in one position (A), are connected directly to the signal terminals (33, 34) of the read-in/read-out device (30), and the data-transfer complementary contacts (68, 69) of the other complementary-contact set (72), whose signal assignment (D, C) does not concur with the signal assignment (D, C) to the mating contacts (15, 16) when a cassette is loaded into the apparatus in the other position (B), are connected to the signal terminals (33, 34) of said read-in/read-out device (30) *via* a switching device (31), the power-supply complementary contacts (17, 18, 70, 71) of the two complementary-contact sets (27, 72) being connected directly to the power-supply terminals (37, 38) on the apparatus.

## Revendications

1. Système d'enregistrement et/ou de reproduction (1), composé d'au moins un appareil d'enregistrement et/ou de reproduction (2) et d'au moins une cassette (3), pouvant être introduite dans un appareil au choix dans deux positions (A, B) retournées autour d'un axe de retournement (4), dans laquelle est logé un support d'enregistrement (5) et qui contient un dispositif de mémoire à semi-conducteur (8) destiné à stocker des données affectées à la cassette et susceptible de réagir électriquement, ce dispositif présentant des zones de mémoire, pouvant être affectées aux deux positions de la cassette, au moins une à chacune des deux positions, et comportant des connexions pour signaux (9, 10), prévues pour effectuer un transfert de données en direction et en provenance du dispositif de stockage à semi-conducteur et présentant une affectation prédéterminée de signaux (D, C) et des connexions d'alimentation (11, 12) prévues pour l'alimentation en tension du dispositif de mémoire à semi-conducteur et présentant une affectation prédéterminée de potentiels (+, -), les connexions pour signaux (9, 10) du dispositif de mémoire à semi-conducteur étant reliées à des contacts (15, 16, 19, 20) montés sur la cassette, accessibles depuis l'extérieur de cette cassette, prévus pour un transfert de données, et entrant en liaison par contact, lors de l'introduction d'une cassette dans l'appareil, avec des contacts de contrepartie (23, 24; 68, 69) logés dans l'appareil, prévus pour effectuer un transfert de données et reliés à des connexions pour signaux (33, 34) prévues pour effectuer un transfert de données, présentant la même affectation de signaux (D, C) que les connexions pour signaux (9, 10), prévues pour un transfert de données, du dispositif de mémoire à semi-conducteur, les connexions (33, 34) appartenant à un dispositif de lecture et d'écriture (30) prévu dans l'appareil et destiné à enregistrer et lire des données, dans et depuis des zones mémoires, pouvant être affectées aux deux positions de la cassette, du dispositif de mémoire à semi-conducteur, et les connexions d'alimentation (11, 12) du dispositif de mémoire à semi-conducteur étant reliées à des contacts (17, 18, 21, 22) montés sur la cassette, accessibles depuis l'extérieur de la cassette, prévus pour l'alimentation en tension et entrant en liaison par contact, lors de l'introduction d'une cassette dans l'appareil, avec des contacts de contrepartie (25, 26; 70, 71) logés dans l'appareil, prévus pour l'alimentation en tension et reliés à des connexions d'alimentation en tension (37, 38) situées du côté de l'appareil, prévues pour l'alimentation en tension, présentant la même affectation de potentiels que les connexions d'alimentation (11, 12) du dispositif de mémoire à semi-conducteur, et un dispositif détecteur (39) étant prévu dans l'appareil, en vue de déterminer la position respective de la cassette introduite dans cet appareil, caractérisé en ce que les contacts (15 à 22) prévus sur la cassette présentent une affectation des signaux (D, C) et des potentiels (+, -) qui, lors de l'introduction de la cassette dans l'appareil, dans une position (A) de la cassette, est identique, et qui, dans l'autre position (B) de la cassette est différente, au moins pour une partie des contacts, par rapport à l'affectation des signaux (D, C) et des potentiels (+, -), aux contacts de contrepartie (23 à 26; 68 à 71) situés dans l'appareil et entrant en liaison par contact avec les contacts (15 à 22) situés sur la cassette, en ce que, dans l'appareil, peut être mis en service un mode d'essai de transfert de données, au cours duquel est tenté un transfert de données, entre le dispositif d'écriture et de lecture (30) et le dispositif de mémoire à semi-conducteur (8), que le dispositif détecteur (39) présente, en vue de déterminer la position respective de la cassette, un étage détecteur de transfert de données (32), à l'aide duquel, en cas d'identité des affectations des signaux (D, C) et des potentiels (+, -) aux contacts (15 à 22) et aux contacts de contrepartie (23 à 26; 68 à 71) entrant en liaison par contact, lors du mode d'essai, peut être détectée, la possibilité d'un transfert de données normal, entre le dispositif d'écriture et de lecture (30) et le dispositif de mémoire à semi-conducteur (8), et que le dispositif détecteur (39) génère, en fonction chaque fois du résultat de détection constaté à l'aide de l'étage détecteur de transfert de données (32), lors du mode d'essai, l'un de deux signaux de détection (S1, S2) caractérisant chacun l'une des deux positions de la cassette.

2. Système selon la revendication 1, caractérisé en ce que les signaux de détection (S1, S2) produits par le dispositif détecteur (39) peuvent être amenés à un dispositif d'affichage (44) destiné à afficher la position respective détectée de la cassette.

3. Système selon la revendication 1 ou 2, dans lequel une cassette (3) peut être mise en oeuvre dans l'appareil (2) dans les deux positions (A, B) retournées, caractérisé en ce que les contacts de contrepartie (23, 24; 23, 24, 25, 26; 68, 69; 70, 71), dont l'affectation, lors de l'introduction de la cassette dans l'appareil dans une position de la cassette, est différente de l'affectation aux contacts (20, 19; 16, 15, 18, 17; 15, 16; 17, 18) entrant en liaison par contact avec ces contacts de contrepartie, sur la cassette, peuvent être alimentés, par l'intermédiaire d'un dispositif de permutation (31) destiné à opérer une permutation de l'affectation à ces contacts de contrepartie, dispositif de permutation à l'aide duquel, en cas de différence des affectations à ces contacts de contrepartie et aux contacts entrant en liaison par contact avec ceux-ci, après introduction de la cassette dans l'appareil, les liaisons à ces contacts de contrepartie peuvent être permutées, en vue d'obtenir des affectations identiques à ces contacts de contrepartie et aux contacts entrant en liaison par contact avec ceux-ci.

4. Système selon la revendication 3, caractérisé en ce que le dispositif de permutation (31) peut être commandé électriquement et est commandé par l'étage détecteur de transfert de données (32), en fonction des résultats de détection chaque fois constatés lors du mode d'essai.

5. Système selon l'une quelconque des revendications précédentes, caractérisé en ce que deux jeux de contacts (13, 14), disposés en symétrie spéculaire par rapport à l'axe de retournement de la cassette, sont prévus sur la cassette, étant entendu que leurs contacts (15 à 22) sont reliés chacun aux connexions (9, 10, 11, 12) du dispositif de mémoire à semi-conducteur (8) et que, lors de l'introduction de la cassette dans l'appareil, les contacts (15, 16, 17, 18) d'un premier jeu de contacts (13) entrent en liaison par contact, dans une position (A) de la cassette, et les contacts (19, 20, 21, 22) de l'autre jeu de contacts (14) entrent en liaison par contact, dans l'autre positon (B) de la cassette, avec les contacts de contrepartie (23, 24, 25, 26) d'un jeu de contacts de contrepartie (27) unique décalé par rapport à l'axe de retournement (4) de la cassette, et que les affectations des signaux (D, C) aux contacts (15, 16, 20, 19), prévus pour un transfert de données, des deux jeux de contacts (13, 14) sont différentes tout en répondant à une symétrie spéculaire, par rapport à l'axe de retournement de la cassette et les affectations des potentiels (+, -) aux contacts (17, 18, 21, 22), prévus pour l'alimentation en tension, des deux jeux de contacts sont identiques, en symétrie spéculaire par rapport à l'axe de retournement de la cassette, et que les contacts de contrepartie (23, 24), prévus pour un transfert de données, du jeu de contacts de contrepartie (27) sont reliés, par l'intermédiaire d'un dispositif de permutation (31), aux connexions pour signaux (33, 34), prévues pour un transfert de données, du dispositif d'écriture et de lecture (30), et les contacts de contrepartie (25, 26), prévus pour l'alimentation en tension, du jeu de contacts de contrepartie (27) sont reliés directement aux connexions d'alimentation en tension (37, 38) situées côté appareil (2).

6. Système selon l'une quelconque des revendications 1 à 4, caractérisé en ce que sur la cassette est prévu un jeu de contacts (13) unique, dont les contacts (15 à 18) sont reliés aux connexions (9 à 12) du dispositif de mémoire à semi-conducteur (8), et dont les contacts (15, 16), prévus pour un transfert de données, et dont les contacts (17, 18), prévus pour l'alimentation en tension, sont chacun disposés en symétrie spéculaire par rapport à l'axe de retournement (4) de la cassette (3), et dont les contacts (15 à 18) entrent en liaison par contact, lors de l'introduction de la cassette dans l'appareil, avec les contacts de contrepartie (23 à 26) d'un jeu de contacts (27) unique, dans les deux positions (A, B) de la cassette, et que tant les contacts de contrepartie (23, 24), prévus pour un transfert de données, du jeu de contacts de contrepartie (27), que les contacts de contrepartie (25, 26), prévus pour l'alimentation en tension, du jeu de contacts de contrepartie (27) sont reliés, par l'intermédiaire d'un dispositif de permutation (31), aux connexions pour signaux (33, 34), prévues pour un transfert de données, du dispositif d'écriture et de lecture (30), et aux connexions d'alimentation en tension (37, 38) situées du côté appareil.

7. Système selon la revendication 6, caractérisé en ce qu'une diode (63) servant de protection de polarité, est branchée entre au moins une connexion d'alimentation (11) du dispositif de mémoire à semi-conducteur (8) et le contact (17), qui y est relié, du jeu de contacts (13) sur la cassette.

8. Système selon l'une quelconque des revendications 1 à 4, caractérisé en ce que sur la cassette (3) est prévu un jeu de contacts (13) unique, dont les contacts (15 à 18) sont reliés aux connexions (9 à 12) du dispositif de mémoire à semi-conducteur (8) et qui est décalé par rapport à l'axe de retournement (4) de la cassette, et dont les contacts (15 à 18), lors de l'introduction de la cassette dans l'appareil, selon la position de la cassette, entrent en liaison par contact dans l'appareil avec les contacts de contrepartie (23 à 26, 68 à 71) de l'un de deux jeux de contacts de contrepartie (27, 28), disposés en symétrie spéculaire par rapport à l'axe de retournement de la cassette, et que les contacts de contrepartie (23, 24) prévus pour un transfert de données, d'un jeu de contacts de contrepartie (27), dont l'affectation des signaux (D, C), lors de l'introduction d'une cassette dans l'appareil dans une position (A), est identique à l'affectation des signaux (D, C) aux contacts (15, 16) entrant en liaison par contact avec eux, sont reliés directement, et les contacts de contrepartie (68, 69) prévus pour un transfert de données, de l'autre jeu de contacts de contrepartie (72), dont l'affectation entre les signaux (D, C) lors de l'introduction d'une cassette dans l'appareil dans l'autre position (B), est différente de l'affectation entre les signaux (D, C) et les contacts (15, 16) entrant en liaison par contact avec eux, sont reliés, par l'intermédiaire d'un dispositif de permutation (31), aux connexions pour signaux (33, 34) du dispositif d'écriture et de lecture (30), et les contacts de contrepartie (17, 18, 70, 71) prévus pour l'alimentation en tension, des deux jeux de contacts de contrepartie (27, 72) sont directement reliés aux connexions d'alimentation en tension (37, 38) situés côté appareil.

9. Système selon l'une quelconque des revendications précédentes, caractérisé en ce que le dispositif de mémoire à semi-conducteur (8) est constitué d'une mémoire à semi-conducteur unique destinée à l'enregistrement et la lecture en mode série de signaux de données, qui présente deux connexions pour signaux (9, 10) prévues pour un transfert de données, constituées par une connexion (9) destinée à des signaux de données (D) en mode série et par une connexion pour signaux (10) destinée à un signal d'horloge (C) et deux connexions d'alimentation (11, 12), prévues pour l'alimentation en tension, et que sur la cassette (3) est prévu au moins un jeu de contacts (13, 14), avec quatre contacts (15, 22) reliés aux quatre connexions (9 à 12) de la mémoire à semi-conducteur, les quatre contacts (15, 16, 17, 18; 19, 20, 21, 22) entrent en liaison par contact, lors de l'introduction d'une cassette dans l'appareil, avec quatre contacts de contrepartie (23, 24, 25, 26; 68, 69, 70, 71) d'un jeu de contacts de contrepartie (27, 72) prévu dans l'appareil.

10. Cassette pour un système selon la revendication 5, pouvant être introduite dans un appareil (2) au choix dans deux positions (A, B), retournées autour d'un axe de retournement (4), dans laquelle est logé un support d'enregistrement (5), et qui contient un dispositif de mémoire à semi-conducteur (8) pouvant réagir électriquement et destiné à stocker des données affectées à la cassette (3), dispositif présentant des zones de mémoire, pouvant être affectées aux deux positions (A, B) de la cassette, au moins une à chacune des deux positions, et des connexions pour signaux (9, 10), prévues pour effectuer un transfert de données en direction et en provenance du dispositif de stockage à semi-conducteur (8) et présentant une affectation prédéterminée de signaux (D, C), et comportant des connexions d'alimentation (11, 12) prévues pour l'alimentation en tension du dispositif de mémoire à semi-conducteur et présentant une affectation prédéterminée de potentiels (+, -), les connexions pour signaux (9, 10) du dispositif de mémoire à semi-conducteur étant reliées à des contacts (15, 16, 19, 20) montés sur la cassette, accessibles depuis l'extérieur, prévus pour un transfert de données, et les connexions d'alimentation (11, 12) du dispositif de mémoire à semi-conducteur étant reliées à des contacts (17, 18, 21, 22) prévus pour l'alimentation en tension, accessibles depuis l'extérieur et montés sur la cassette, caractérisée en ce que, sur la cassette sont prévus deux jeux de contacts (13, 14), disposés en symétrie spéculaire par rapport à l'axe de retournement de la cassette, jeux dont les contacts (15 à 22) sont chacun reliés aux connexions (9, 10, 11, 12) du dispositif de mémoire à semi-conducteur (8), et que les affectations des signaux (D, C) aux contacts (15, 16, 20, 19), prévus pour un transfert de données, des deux jeux de contacts (13, 14) sont différentes, tout en répondant à une symétrie spéculaire par rapport à l'axe de retournement (4) de la cassette, et les affectations des potentiels (+, -) aux contacts (17, 19, 21, 22), prévus pour l'alimentation en tension, des deux jeux de contacts sont identiques tout en répondant à une symétrie spéculaire par rapport à l'axe de retournement de la cassette.

11. Cassette pour un système selon la revendication 6, pouvant être introduite dans un appareil (2) au choix dans deux positions (A, B) retournées autour d'un axe de retournement (4), dans laquelle est logé un support d'enregistrement (5) et qui contient un dispositif de mémoire à semi-conducteur (8), destiné à stocker des données affectées à la cassette (3) et pouvant réagir électriquement, dispositif présentant des zones de mémoire, pouvant être affectées aux deux positions (A, B) de la cassette, au moins une à chacune des deux positions et présentant, pour un transfert de données en direction et en provenance du dispositif de mémoire à semi-conducteur (8), des connexions pour signaux (9, 10), présentant une affectation prédéterminée de signaux (D, L) et comportant des connexions d'alimentation (11, 12), prévues pour l'alimentation en tension du dispositif de mémoire à semi-conducteur et présentant une affectation prédéterminée de potentiels (+, -), les connexions pour signaux (9, 10) du dispositif de mémoire à semi-conducteur étant reliées à des contacts (15, 16, 19, 20) montés sur la cassette, accessibles depuis l'extérieur de la cassette, prévus pour un transfert de données et les connexions d'alimentation (11, 12) du dispositif de mémoire à semi-conducteur étant reliées à des contacts (17, 18, 21, 22) montés sur la cassette, accessibles depuis l'extérieur, prévus pour l'alimentation en tension, caractérisée en ce que sur la cassette (3) est prévu un jeu de contacts (13) unique, dont les contacts sont reliés aux connexions (9 à 12) du dispositif de mémoire à semi-conducteur (8), et dont les contacts (15, 16), prévus pour un transfert de données, et les contacts (17, 18), prévus pour l'alimentation en tension, sont respectivement disposés en symétrie spéculaire par rapport à l'axe de retournement (4) de la cassette (3).

12. Cassette selon la revendication 11, caractérisée en ce qu'une diode (63) servant de protection de polarité est branchée entre au moins une connexion d'alimentation (11) du dispositif de mémoire à semi-conducteur (8) et le contact (17), qui y est relié, du jeu de contacts (13) sur la cassette.

13. Cassette selon l'une quelconque des revendications 10 à 12, caractérisée en ce que, le dispositif de mémoire à semi-conducteur (8), est constitué d'une mémoire à semi-conducteur unique, destinée à l'enregistrement et à la lecture en mode série de signaux de données, qui présente deux connexions pour signaux (9, 10) prévues pour un transfert de données, constituées par une connexion pour signaux (9) destinée à des signaux de données (D) en mode série et par une connexion pour signaux (10) destinée à un signal d'horloge (C), et deux connexions d'alimentation (11, 12) prévues pour l'alimentation en tension, et que sur la cassette est prévu au moins un jeu de contacts (13, 14) avec quatre contacts (15 à 22) reliés aux quatre connexions (9 à 12) de la mémoire à semi-conducteur.

14. Appareil d'enregistrement et/ou de reproduction, pour un système selon l'une quelconque des revendications 1 à 9, destiné à coopérer avec au moins une cassette (3) pouvant être introduite dans un appareil au choix dans deux positions (A, B) retournées par rapport à un axe de retournement, dans laquelle est logé un support d'enregistrement (5) et qui contient un dispositif de mémoire à semi-conducteur (8) pouvant réagir électriquement et destiné à stocker des données affectées à la cassette, ce dispositif comportant des zones de mémoire, pouvant être affectées aux deux positions de la cassette, au moins une à chacune des deux positions, des contacts (15, 16, 19, 20) destinés à un transfert de données vers et depuis le dispositif de mémoire à semi-conducteur et des contacts (17, 18, 21, 22) destinés à l'alimentation en tension du dispositif de mémoire à semi-conducteur, l'appareil étant pourvu de contacts de contrepartie (23 à 26; 68 à 71), destinés à être mis en liaison par contact avec les contacts de la cassette, lors de l'introduction de cette cassette dans l'appareil, d'un dispositif d'écriture et de lecture (30), destiné à enregistrer et lire des données dans et sur les zones de mémoire, pouvant être affectées aux deux positions de la cassette, du dispositif de mémoire à semi-conducteur, et d'un dispositif détecteur (39) destiné à déterminer la position respective de la cassette introduite dans l'appareil, caractérisé en ce que dans l'appareil peut être mis en oeuvre un mode d'essai de transfert de données, en vue de tenter un transfert de données entre le dispositif d'écriture et de lecture (30) et le dispositif de mémoire à semi-conducteur (8), que le dispositif détecteur (39) présente, en vue de déterminer la position respective de la cassette, un étage détecteur de transfert de données (32), à l'aide duquel peut être détecté un éventuel transfert de données normal, entre le dispositif d'écriture et de lecture (30) et le dispositif de mémoire à semi-conducteur (8), en cas d'affectations identiques des signaux (D, C) et des potentiels (+, -) aux contacts et aux contacts de contrepartie placés en liaison par contact, lors du mode d'essai, et que le dispositif détecteur (39) fournit en fonction chaque fois du résultat de détection constaté à l'aide de l'étage détecteur de transfert de données (32), lors du mode d'essai, un signal de détection (S1, S2) caractérisant chacune des deux positions de la cassette.

15. Appareil d'enregistrement et/ou de reproduction selon la revendication 14, caractérisé en ce que les signaux de détection (S1, S2) fournis par le dispositif détecteur (39) peuvent être acheminés à un dispositif d'affichage (44), pour indiquer chaque fois la position respective détectée de la cassette.

16. Appareil d'enregistrement et/ou de reproduction selon la revendication 14 ou 15, destiné à mettre en oeuvre une cassette dans deux positions retournées, caractérisé en ce que les contacts de contrepartie (23, 24; 23, 24, 25, 26; 68, 69; 70, 71) peuvent être alimentés, par l'intermédiaire d'un dispositif de permutation (31), en vue d'effectuer une permutation de l'affectation à ces contacts de contrepartie.

17. Appareil d'enregistrement et/ou de reproduction selon la revendication 16, caractérisé en ce que le dispositif de permutation (31) peut être commandé électriquement et est commandé par l'étage détecteur de transfert de données (32) en fonction des résultats de détection chaque fois constatés lors du mode d'essai.

18. Appareil d'enregistrement et/ou de reproduction selon l'une quelconque des revendications 14 à 17, destiné à coopérer avec une cassette comportant deux jeux de contacts (13, 14), disposés en symétrie spéculaire par rapport à l'axe de retournement de la cassette, étant entendu que les contacts (15 à 22) sont reliés chacun aux connexions (9 à 12) du dispositif de mémoire à semi-conducteur (8) et que, lors de l'introduction de la cassette dans l'appareil, dans une position (A) de la cassette, les contacts (15 à 18) d'un jeu de contacts (13) entrent en liaison par contact et, dans l'autre position (B) de la cassette, les contacts (19 à 22) de l'autre jeu de contacts (14) entrent en liaison par contact, avec les contacts de contrepartie (23 à 26) d'un jeu de contacts de contrepartie (27) dans l'appareil, caractérisé en ce que le jeu de contacts de contrepartie est décalé par rapport à l'axe de retournement de la cassette dans l'appareil, que les contacts de contrepartie (23, 24), prévus pour un transfert de données, du jeu de contacts de contrepartie (27), sont reliés, par un dispositif de permutation (31), aux connexions pour signaux (33, 34), prévues pour un transfert de données, du dispositif d'écriture et de lecture (30), et les contacts de contrepartie (25, 26), prévus pour l'alimentation en tension, du jeu de contacts de contrepartie (27) sont directement reliés aux connexions d'alimentation en tension (37, 38) situées côté appareil.

19. Appareil d'enregistrement et/ou de reproduction selon l'une quelconque des revendications 14 à 17, destiné à coopérer avec une cassette, pourvue d'un jeu de contacts (13) unique, dont les contacts (15 à 18) sont reliés aux connexions (9 à 12) du dispositif de mémoire à semi-conducteur (8) et dont les contacts (15, 16), prévus pour un transfert de données, et les contacts (17, 18), prévus pour l'alimentation en tension, sont chacun disposés, en symétrie spéculaire par rapport à l'axe de retournement (4) de la cassette (3), et dont les contacts (15 à 18) lors de l'introduction de la cassette dans l'appareil, entrent en liaison par contact dans l'appareil avec les contacts de contrepartie (23 à 26) d'un jeu de contacts (27) unique, dans les deux positions (A, B) de la cassette, caractérisé en ce que tant les contacts de contrepartie (23, 24), prévus pour un transfert de données, du jeu de contacts de contrepartie (27) que les contacts de contrepartie (25, 26), prévus pour l'alimentation en tension, du jeu de contacts de contrepartie sont reliés, par l'intermédiaire d'un dispositif de permutation (31), aux connexions pour signaux (33, 34), prévues pour un transfert de données, du dispositif d'écriture et de lecture (30) et aux connexions d'alimentation en tension (37, 38) situées du côté appareil.

20. Appareil d'enregistrement et/ou de reproduction selon l'une quelconque des revendications 14 à 17, destiné à coopérer avec une cassette pourvue d'un jeu de contacts (13) unique, dont les contacts (15 à 18) sont reliés aux connexions (9 à 12) du dispositif de mémoire à semi-conducteur (8) et qui est décalé par rapport à l'axe de retournement (4) de la cassette et dont les contacts (15 à 18), lors de l'introduction de la cassette dans l'appareil, en fonction de la position de la cassette, entrent en liaison par contact dans l'appareil avec les contacts de contrepartie (23 à 26, 68 à 71) de l'un de deux jeux de contacts de contrepartie (27, 28) disposés en symétrie spéculaire par rapport à l'axe de retournement de la cassette, caractérisé en ce que les contacts de contrepartie (23, 24), prévus pour un transfert de données, d'un jeu de contacts de contrepartie (27), dont l'affectation des signaux (D, C) lors de l'introduction d'une cassette dans l'appareil dans une position (A) est identique à l'affectation des signaux (D, C) aux contacts (15, 16) entrant en liaison par contact avec eux, sont reliés directement, et les contacts de contrepartie (68, 69), prévus pour un transfert de données, de l'autre jeu de contacts de contrepartie (72), dont l'affectation des signaux (D, C) lors de l'introduction d'une cassette dans l'appareil, dans l'autre position (B) est différente de l'affectation des signaux (D, C) aux contacts (15, 16) entrant en liaison par contact avec eux sont reliés, par l'intermédiaire d'un dispositif de permutation (31), aux connexions pour signaux (33, 34), du dispositif d'écriture et de lecture (30) et les contacts de contrepartie (17, 18, 70, 71), prévus pour l'alimentation en tension, des deux jeux de contacts de contrepartie (27, 72) sont reliés directement aux connexions d'alimentation en tension (37, 38) situées côté appareil.
